(19) **Europäisches Patentamt / European Patent Office / Office européen des brevets**

(11) **EP 4 651 548 A1**

(12) **EUROPEAN PATENT APPLICATION**
published in accordance with Art. 153(4) EPC

(43) Date of publication:
**19.11.2025 Bulletin 2025/47**

(51) International Patent Classification (IPC):
**H04W 24/04** (2009.01)   **H04W 16/28** (2009.01)
**H04W 84/12** (2009.01)   **H04W 88/06** (2009.01)

(21) Application number: **23916221.7**

(52) Cooperative Patent Classification (CPC):
**H04W 16/28; H04W 24/04; H04W 84/12;
H04W 88/06**

(22) Date of filing: **18.12.2023**

(86) International application number:
**PCT/JP2023/045192**

(87) International publication number:
**WO 2024/150607 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.01.2023   JP 2023003883**

(71) Applicant: **Sony Group Corporation
Tokyo 108-0075 (JP)**

(72) Inventors:
• **AIO Kosuke
Tokyo 108-0075 (JP)**

• **TANAKA Ken
70327 Stuttgart (DE)**
• **HIRATA Ryuichi
Tokyo 108-0075 (JP)**
• **HANDTE Thomas
70327 Stuttgart (DE)**
• **TANAKA Yusuke
Tokyo 108-0075 (JP)**
• **SUGAYA Shigeru
Tokyo 108-0075 (JP)**
• **MORIOKA Yuichi
Tokyo 108-0075 (JP)**

(74) Representative: **D Young & Co LLP
3 Noble Street
London EC2V 7BQ (GB)**

(54) **COMMUNICATION DEVICE AND COMMUNICATION METHOD**

(57)   [Object] To make it possible to quickly detect the presence of an obstacle that blocks communication performed using one of a plurality of links.

[Solving Means] A communication apparatus according to the present disclosure includes a first communication section that performs a first wireless communication using a first link; and a second communication section that performs a second wireless communication using a second link with a frequency higher than a frequency of the first link, in which the first communication section acquires channel state information regarding the first link on a basis of a radio signal of the first link, and detects presence of an obstacle that blocks the second wireless communication, on a basis of the channel state information regarding the first link.

First Example：mmWave Link Disconnection Sequence

FIG.11

# EP 4 651 548 A1

## Description

Technical Field

The present disclosure relates to a communication apparatus and a communication method.

Background Art

The demand for an increase in data traffic has grown over the years, and there is also a need for a further increase in data capacity and a further improvement in peak throughput with respect to a wireless local area network (LAN). Multi-link operation (hereinafter referred to as an MLO) used to perform communication simultaneously using a plurality of links of different operating frequencies has attracted attention as a method that meets such a demand, and is expected to be put into practical use with next generation standards of IEEE802.11 (IEEE802.11be/Wi-Fi 7).

The currently discussed MLO is an approach of setting a plurality of links using different channels in bands of 2.4 GHz, 5 GHz, and 6 GHz (hereinafter collectively referred to as sub 7 GHz). On the other hand, there is recently a discussion about the MLO with which sub 7 GHz and a millimeter-wave (mmWave) band such as a band of 45 GHz or 60 GHz are used in combination to set a plurality of links. Wireless LAN standards that correspond to IEEE802.11ad/ay using a 60 GHz band have been set with respect to the millimeter-wave band, where a band of 12 GHz or greater can be used maximum. Thus, it is expected that high-capability wireless communication that makes it possible to handle a capacity higher than or equal to a capacity that can be theoretically provided using sub 7 GHz or greater can be performed by using the MLO with which sub 7 GHz and a millimeter-wave band are used in combination. On the other hand, millimeter-waves have a large propagation loss due to the nature of radio waves, and further exhibit a high degree of straightness. Thus, when an obstacle is situated in a communication path, there occurs a problem with robustness, that is, a problem in which there is a great degradation in communication characteristics. Thus, when the MLO is performed using sub 7 GHz and a millimeter-wave band in combination, wireless communication can be performed with capacity higher than before, but a link of a millimeter-wave band (mmWave link) may be blocked frequently. In this case, there is a reduction in data capacity since data transmission is performed only using a sub 7 GHz link.

Thus, it is desirable that overcoming of blocking of an mmWave link be detected quickly and data transmission using the mmWave link be able to be restarted immediately after the blocking of the mmWave link is overcome. It is conceivable that a signal used for detection could be transmitted frequently using an mmWave link, in order to detect overcoming of the blocking immediately. However, there may occur various problems such as an increase in process volume and an increase in power consumption. On the other hand, when the signal used for detection is transmitted less frequently, there may be a reduction in data capacity since data transmission using an mmWave link is not allowed to be restarted for a period of time from an mmWave link being re-established to a next signal used for detection being transmitted. Moreover, when beamforming is performed using an mmWave link, there is a need for a training of beamforming again after overcoming of blocking is detected. As a result, data transmission may be delayed in being restarted.

Citation List

Patent Literature

Patent Literature 1: IEEE802.11-21/0351r5

Disclosure of Invention

Technical Problem

In view of the circumstances described above, the present disclosure provides a communication apparatus and a communication method that make it possible to quickly detect the presence of an obstacle that blocks communication performed using one of a plurality of links.

Solution to Problem

A communication apparatus according to the present disclosure includes a first communication section that performs a first wireless communication using a first link; and a second communication section that performs a second wireless communication using a second link with a frequency higher than a frequency of the first link, in which the first communication section acquires channel state information regarding the first link on a basis of a radio signal of the first link, and detects presence of an obstacle that blocks the second wireless communication, on a basis of the channel state information regarding the first link.

A communication apparatus according to the present disclosure includes a first communication section that performs a first wireless communication using a first link; and a second communication section that performs a second wireless communication using a second link with a frequency higher than a frequency of the first link, in which the first communication section measures channel state information regarding the first link on a basis of a radio signal of the first link, and when a reduction in a quality of the second wireless communication is detected in the second link, the first communication section calculates a correlation value of a correlation between first channel-state information and second channel-state information, the first channel-state information being the channel state information regarding the first link, which is measured before the reduction in the quality of the second wireless communication is detected, the second channel-state information being the channel state information regarding the first link, which is measured after the reduction in the quality of the second wireless communication is detected, and the first communication section transmits information indicating the correlation value.

Brief Description of Drawings

[Fig. 1A] Fig. 1A illustrates an example of an overall system configuration according to the present embodiment.
[Fig. 1B] Fig. 1B illustrates a person passing in front of an AP MLD during communication between the AP MLD and an STA MLD.
[Fig. 2] Fig. 2 illustrates an example of restarting data transmission using an mmWave link after the mmWave link is blocked due to blocking.
[Fig. 3] Fig. 3 is a block diagram of the AP MLD corresponding to an example of a communication apparatus according to the present embodiment.
[Fig. 4] Fig. 4 is a block diagram of the STA MLD corresponding to an example of a communication apparatus according to the present embodiment.
[Fig. 5] Fig. 5 is a diagram of a sequence of an overall operation according to a first example.
[Fig. 6] Fig. 6 illustrates an example of a sequence of a setup phase.
[Fig. 7] Fig. 7 illustrates an example of a configuration of a capability element (a sub 7 GHz link) that is an example of capability information for a sub 7 GHz link.
[Fig. 8] Fig. 8 illustrates an example of a configuration of a capability element that is an example of capability information for an mmWave link.
[Fig. 9] Fig. 9 illustrates an example of a sequence of a calibration phase.
[Fig. 10] Fig. 10 illustrates an example of a sequence of a normal sounding phase.
[Fig. 11] Fig. 11 illustrates an example of a sequence of an mmWave link disconnection phase.
[Fig. 12] Fig. 12 illustrates an example of a frame configuration of a CSI variation measurement request.
[Fig. 13] Fig. 13 illustrates an example of a frame configuration of a CSI variation measurement response.
[Fig. 14] Fig. 14 illustrates an example of a sequence of a link scanning phase.
[Fig. 15] Fig. 15 is a detailed flowchart of Step A503 illustrated in Fig. 14.
[Fig. 16] Fig. 16 illustrates an example of a sequence of an mmWave link recovery phase.
[Fig. 17] Fig. 17 illustrates an example of a frame configuration of a CSI variation measurement report.
[Fig. 18] Fig. 18 illustrates an example of an overall sequence according to a second example.
[Fig. 19] Fig. 19 illustrates an example of a sequence of a calibration phase in the second example.
[Fig. 20] Fig. 20 illustrates an example of a frame configuration of a new NDP-A.
[Fig. 21] Fig. 21 illustrates an example of a configuration of a CSI correlation element included in a CSI Correlation Feedback frame.
[Fig. 22] Fig. 22 illustrates an example of a sequence of a normal sounding phase in the second example.
[Fig. 23] Fig. 23 illustrates an example of a sequence of a link scanning phase in the second example.
[Fig. 24] Fig. 24 is a diagram of a sequence of an overall operation according to a third example.
[Fig. 25] Fig. 25 illustrates an example of a sequence of a calibration phase in the third example.
[Fig. 26] Fig. 26 illustrates an example of a configuration of a data frame in the third example.
[Fig. 27] Fig. 27 illustrates an example of a sequence of a normal data Tx phase in the third example.
[Fig. 28] Fig. 28 illustrates an example of a sequence of a link scanning phase in the third example.
[Fig. 29] Fig. 29 is a diagram used to describe effects provided by the present embodiment.
[Fig. 30] Fig. 30 is a block diagram of an example of a configuration of hardware of a computer that performs a series of processes according to the present embodiment using a program.
[Fig. 31] Fig. 31 is a block diagram of an example of a schematic configuration of a smartphone to which the present embodiment is applied.

[Fig. 32] Fig. 32 is a block diagram of an example of a schematic configuration of an in-vehicle apparatus to which the present embodiment is applied.

[Fig. 33] Fig. 33 is a block diagram of an example of a schematic configuration of a wireless to which the present embodiment is applied.

Mode(s) for Carrying Out the Invention

Embodiments of the present disclosure will now be described in detail below with reference to the drawings. Note that, in the specification and the drawings, structural elements that include substantially the same function are denoted by the same reference numeral to omit a description thereof as appropriate.

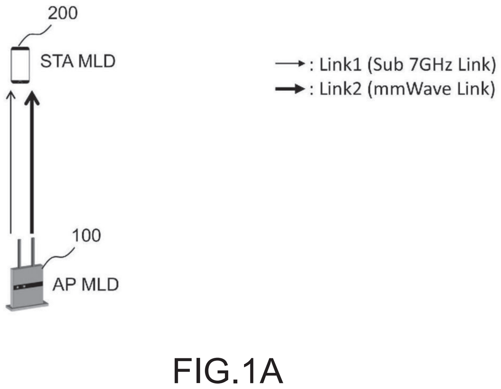

Fig. 1A illustrates an example of an overall system configuration according to the present embodiment. The system illustrated in Fig. 1A includes at least one access point (AP) apparatus 100 and at least one station (STA) apparatus 200. The AP apparatus 100 is a base station, and the STA apparatus 200 is a child device of the base station. The AP apparatus 100 and the STA apparatus 200 each have a configuration of a multi-link device (MLD) that performs multiple communications at a time using a plurality of links. It is assumed that, in the example illustrated in the figure, processing of connecting the AP apparatus 100 and the STA apparatus 200 using a link 1 (a first link) and using a link 2 (a second link) has been completed and data communication is being performed. The AP apparatus 100 is hereinafter referred to as an AP MLD 100, and the STA apparatus 200 is hereinafter referred to as an STA MLD 200.

An entity that performs processing related to the link 1 in the AP MLD 100 is referred to as an AP 1 (affiliated with the AP MLD), and an entity that performs processing related to the link 2 in the AP MLD 100 is referred to as an AP 2 (affiliated with the AP MLD).

Further, an entity that performs processing related to the link 1 in the STA MLD 200 is referred to as an STA 1 (affiliated with the STA MLD), and an entity that performs processing related to the link 2 in the STA MLD 200 is referred to as an STA 2 (affiliated with the STA MLD).

The link 1 and the link 2 respectively operate at different frequencies. The frequency for the link 2 is higher than the frequency for the link 1. In the present embodiment, it is assumed that the link 1 is a link that operates on one of a plurality of channels belonging to a sub 7 GHz band (a sub 7 GHz link) and the link 2 is a link that operates on one of a plurality of channels belonging to a millimeter-wave band (an mmWave link).

An issue of a related technology is described on the basis of the system configuration illustrated in Fig. 1A.

It is assumed that a person corresponding to an obstacle passes in front of the AP MLD 100 during communication between the AP MLD 100 and the STA MLD 200. In this case, the sub 7 GHz link corresponding to the link 1 makes it possible to continuously perform communication without a great degradation in communication characteristics that is caused due to diffraction of radio waves. On the other hand, communication using the mmWave link is blocked by the person, where the mmWave link corresponds to the link 2 with which radio waves exhibit a high degree of straightness. This may result in a great degradation in communication characteristics. It is assumed that a state of being blocked is a state in which logical connection (association) is maintained but communication is temporarily not allowed to be performed due to the presence of an obstacle. Note that the state of being blocked may include a state in which connection is broken (disassociation) due to communication not being allowed to be performed for a specified period of time or more.

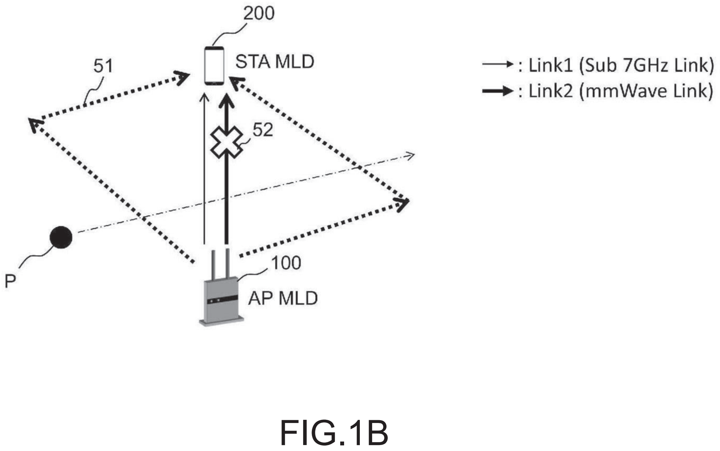

Fig. 1B illustrates a person P passing in front of the AP MLD 100 during communication between the AP MLD 100 and the STA MLD 200. When the person passes in front of the AP MLD 100, the sub 7 GHz link corresponding to the link 1 still makes it possible to continuously perform communication without a great degradation in communication characteristics that is caused due to diffraction 51 of radio waves. In other words, on the sub 7 GHz link, channel state information (CSI) varies and received power is degraded due to non-line-of-sight (NLOS), but the link is still not blocked. On the other hand, on the mmWave link corresponding to the link 2 with which radio waves exhibit a high degree of straightness, there is a great degradation 52 in communication characteristics, and communication is temporarily blocked. It is said that an average of a blocking period of time for which communication is blocked due to passage of a person is 560 ms and that a standard deviation of the blocking period of time is about 100 ms. Communication using the mmWave link is not allowed to be performed during the blocking period of time, and thus there is a need to perform communication only using the sub 7 GHz link. Note that, when blocking occurs on the mmWave link, a beamforming training (hereinafter referred to as a BF training) on the mmWave link may be performed again, and the directionality of beams may be changed to avoid blocking. However, when the person P passes by the AP MLD 100, communication remains unstable until the person has passed by the AP MLD 100 even when there is a change in beam direction. Thus, the mmWave link is not allowed to be used stably despite an increase in process volume.

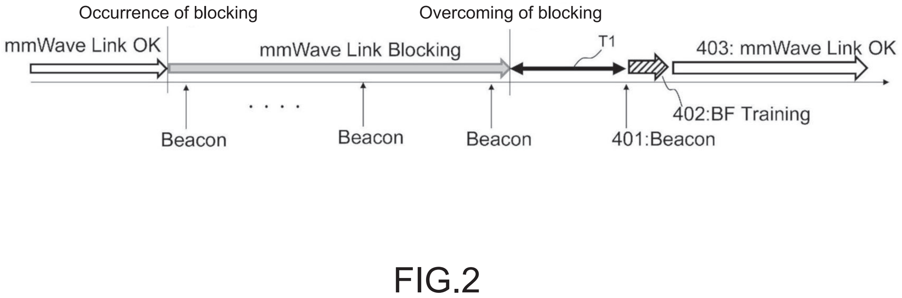

Fig. 2 illustrates an example of an operation performed until data transmission using an mmWave link is restarted after the mmWave link is blocked. In order to restart data transmission using an mmWave link (in order to re-establish the link), the STA 2 receives a beacon signal 401 or any signal from the AP 2, and detects that there is no longer blocking. Thereafter, the STA 2 performs a BF training 402 again, or performs reconnection processing as necessary. Accordingly, data transmission 403 using the mmWave link is restarted. The total of a period of time T1 from the blocking being overcome to the beacon signal 401 being received, and a period of time necessary for the BF training 402 corresponds to a necessary period of time from the blocking being overcome to data transmission being restarted (the mmWave link being re-established). In the operation example illustrated in Fig. 2, the period of time from the blocking being overcome to the mmWave link being re-established is long due to the following two points.

**[0019]** * A wait time until a next beacon signal is transmitted

It is often the case that a transmission interval of a beacon signal is normally set to be about 100 to 200 ms. In other words, after blocking of an mmWave link is overcome, there is a need to wait for 100 ms to 200 ms maximum until a next beacon signal 401 is transmitted. This may be a factor that considerably reduces the efficiency in communication. Transmitting a beacon signal more frequently using an mmWave link or keeping on transmitting another signal frequently using the mmWave link can also be adopted as a method used to quickly detect overcoming of blocking. However, there are problems with overhead and power consumption. Thus, there are limitations in transmitting a beacon signal more frequently.

**[0021]** * Re-conduction of BF Training

In the case in which the AP 2 uses beams to communicate with the STA 2, it is necessary that, when the AP 2 detects overcoming of blocking of an mmWave link, the AP 2 perform the BF training 402 again together with the STA 2 and set a beamforming parameter (a BF parameter) necessary to form beams. However, it takes a specified time to perform the BF training 402. When, for example, a BF training defined by IEEE802.11ad is adopted, it takes 2 ms maximum for each of the AP 2 and the STA 2 to determine a corresponding one of candidate directions of transmitting and receiving beams. Further, it takes more time to determine an optimal combination of beam directions after the candidate beam directions are determined. The BF parameter is an example of a transmission parameter, and another parameter such as a transmission rate may be adjusted.

When a person passes by for several hundreds of millimeters only, there is generally not a great change in a channel state of each of a sub 7 GHz link and an mmWave link between before and after blocking. Focused on this matter, the present embodiment reduces a necessary period of time from blocking of an mmWave link being overcome to the link being re-established, on the basis of policies 1 and 2 described below.

[Policy 1] During blocking of an mmWave link, channel state information (hereinafter referred to as CSI) is measured on a sub 7 GHz link, and reestablishment of the mmWave link is determined on the basis of a correlation value of a correlation between the measured CSI and previous CSI. The previous CSI refers to CSI measured before the mmWave link is blocked (CSI measured before blocking), or most recently measured CSI (immediately precedent CSI). More particularly, the following operations are performed. * The following determination is performed according to a correlation value of a correlation between currently measured CSI and previous CSI.

When currently measured CSI has a high correlation with CSI measured before blocking, it is determined that the blocking has been overcome and that a channel state of the mmWave link returns to a state that is the same as or equivalent to the state before the blocking.

When the currently measured CSI does not have a high correlation (has a low correlation) with the CSI measured before blocking but has a high correlation with immediately precedent CSI, it is determined that the blocking has been overcome and that a channel state of the mmWave link becomes stable. However, the channel state of the mmWave link is different from a state indicated by the CSI measured before blocking.

When the currently measured CSI does not have a high correlation with the CSI measured before blocking or the immediately precedent CSI, it is determined that the blocking has not been overcome yet, and the CSI keeps on being measured for a specified period of time. * The CSI may be measured by the AP 1 or by the STA 1. When the CSI is measured by the STA 1, the STA 1 may transmit, to the AP 1 and as a report addressed to the AP 1, information indicating the very value of the measured CSI, or only information indicating a correlation value.

[Policy 2] A previous BF parameter for the mmWave link is retained, and the reuse of the retained BF parameter is reported to the STA 2 after the mmWave link is re-established. More particularly, the following operations are performed.

* When the mmWave link is blocked, the AP 1 reports to the STA 2 through the sub 7 GHz link (the AP 1 and the STA 1) and the STA 1 that a BF parameter will be retained.

* When blocking has been overcome and the mmWave link is re-established and when the currently measured CSI described above has a high correlation with CSI measured before blocking, the AP 1 reports to the STA 2 through the STA 1 that a retained BF parameter will be reused.

* When blocking has been overcome and the mmWave link is re-established and when the currently measured CSI described above does not have a high correlation with the above-described CSI measured before blocking but has a high correlation with immediately precedent CSI, the AP 1 reports to the STA 2 that the retained BF parameter will be discarded (a BF training will be performed again). The report to the STA 2 is performed through the STA 1.

In the following description, first, basic block configurations of the AP MLD 100 and the STA MLD 200 are described, and thereafter detailed operations of the AP MLD 100 and the STA MLD 200 that achieve the policies 1 and 2 described above are described.

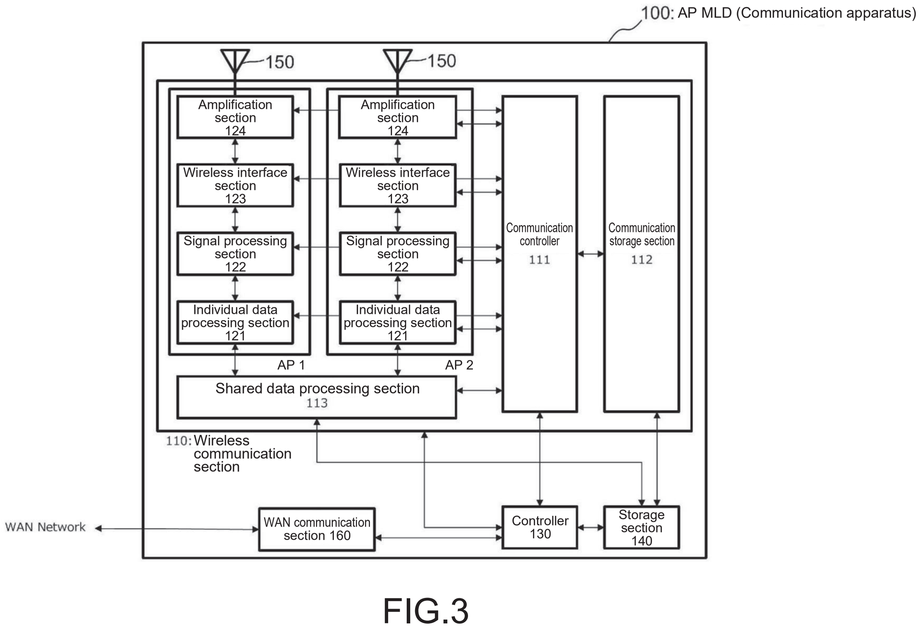

Fig. 3 is a block diagram of the AP MLD 100 corresponding to an example of a communication apparatus according to the present embodiment.

The AP MLD 100 serving as a communication apparatus includes a wireless communication section 110, a controller 130, a storage section 140, a plurality of antennas 150, and a WAN communication section 160. The wireless communication section 110 includes a communication controller 111, a communication storage section 112, a shared data processing section 113, the AP 1, and the AP 2.

The AP 1 and the AP 2 each operate as an AP affiliated with the AP MLD, and each include an individual data processing section 121, a signal processing section 122, a wireless interface section 123, and an amplification section 124. There is an AP for each link, and there are two APs in this example. However, the number of APs can be increased or decreased according to the number of links set at a time.

The AP 1 is an example of a first communication section that performs a first wireless communication using a first link, and the AP 2 is an example of a second communication section that performs a second wireless communication using a second link. In addition to the AP 1, the first communication section may include a function of performing AP 1-related control performed by the controller 130 and the communication controller 111, and a function of performing AP 1-related processing performed by the shared data processing section 113. Likewise, in addition to the AP 2, the second communication section may include a function of performing AP 2-related control performed by the controller 130 and the communication controller 111, and a function of performing AP 2-related processing performed by the shared data processing section 113.

The AP 1 and the AP 2 each include a pair of the amplification section 124 and the antenna 150 that form a configuration based on 1x1 single-input single-output (SISO). Note that the AP 1 and the AP 2 may each include much more antennas and amplification sections to enable multi-input multi-output (MIMO) transmission-and-reception processing.

The communication controller 111 controls operations of the respective structural elements and information transmission performed between the structural elements. Further, the communication controller 111 performs control to deliver, to each individual data processing section 121 and the shared data processing section 113, control information and management information that are to be reported to another communication apparatus (the STA MLD 200).

The communication storage section 112 retains information to be used by the communication controller 111. Further, the communication storage section 112 retains data to be transmitted (such as data to be transmitted to the STA 1 or STA 2 included in the STA_MLD, or data to be transmitted to a WAN) and received data (such as data received from the STA 1 or STA 2 included in the STA_MLD, or data received from the WAN). A transmission buffer that retains data to be transmitted is included in the communication storage section 112.

At the time of transmission, the shared data processing section 113 performs sequence management of the data retained in the communication storage section 112 as well as the control information and management information that are received from the communication controller 111, and performs, for example, processing of encrypting, for example, data. Thereafter, the shared data processing section 113 delivers, for example, the processed data to the individual data processing section 121, which has acquired a right to transmission to a space (a wireless medium). At the time of reception, the shared data processing section 113 decrypts the data received from the individual data processing section 121, and performs reorder processing. The shared data processing section 113 is also referred to as an upper MAC section.

At the time of transmission, the individual data processing section 121 adds a media access control (MAC) header and an error-detection code to, for example, the data received from the shared data processing section 113 to generate a frame. Further, the individual data processing section 121 may perform processing of coupling a plurality of frames. At the time of reception, the individual data processing section 121 performs processing of decoupling a MAC header of the received frame from another frame, and performs analysis of the MAC header and error detection on the frame. Then, the individual data processing section 121 delivers, for example, the data acquired from the frame to the shared data processing section 113. The individual data processing section 121 is also referred to as a lower MAC section. Note that the frame as used herein may also include a frame of which a type field of a frame control field in a MAC header indicates any frame type such as "data", "management", or "control."

At the time of transmission, the signal processing section 122 performs, for example, encoding, interleaving, and modulation on a frame, and adds a physical header to generate a symbol stream. At the time of reception, the signal processing section 122 analyzes the physical header, and performs, for example, demodulation, deinterleaving, and decoding on the symbol stream to obtain the frame. Further, the signal processing section 122 performs measurement processing and space separation processing on channel characteristics as necessary. The signal processing section 122 is also referred to as a PHY section.

At the time of transmission, the wireless interface section 123 performs digital-to-analog signal conversion, filtering, up-conversion, and phase control on a symbol stream, and generates a transmission signal. At the time of reception, the wireless interface section 123 performs down-conversion, filtering, and analog-to-digital signal conversion on a reception signal, and generates the symbol stream.

The amplification section 124 amplifies a signal input by the wireless interface section 123 or the antenna 150. A portion of the amplification section 124 may be a structural element external to the wireless communication section 110. Further, a portion of the amplification section 124 may be included in the wireless interface section 123.

The wireless interface section 123 and the amplification section 124 are also collectively referred to as an RF section.

The controller 130 controls the wireless communication section 110 and the communication controller 111. Further, on behalf of the communication controller 111, the controller 130 may perform a portion of operations performed by the communication controller 111. Furthermore, the communication controller 111 and the controller 130 may be collectively formed into a single block.

The storage section 140 retains information used by the controller 130 and the wireless communication section 110. Further, on behalf of the communication storage section 112, the storage section 140 may perform a portion of operations performed by the communication storage section 112. The storage section 140 and the communication storage section 112 may be collectively formed into a single block.

The WAN communication section 160 decrypts a data packet acquired from a backhaul WAN, and delivers the decrypted packet to the wireless communication section 110 through the controller 130. With respect to the form of the packet delivered here, the packet may be in a state in which an IP header remains with no change (an access point mode) or in a state in which the IP header has been decrypted and removed by the WAN communication section 160 (a router mode).

Note that, in Fig. 3, it is assumed that the wireless communication section 110 is configured as a single IC, although the configuration of the wireless communication section 110 is not limited thereto. For example, a wireless interface section may be configured as a separate IC.

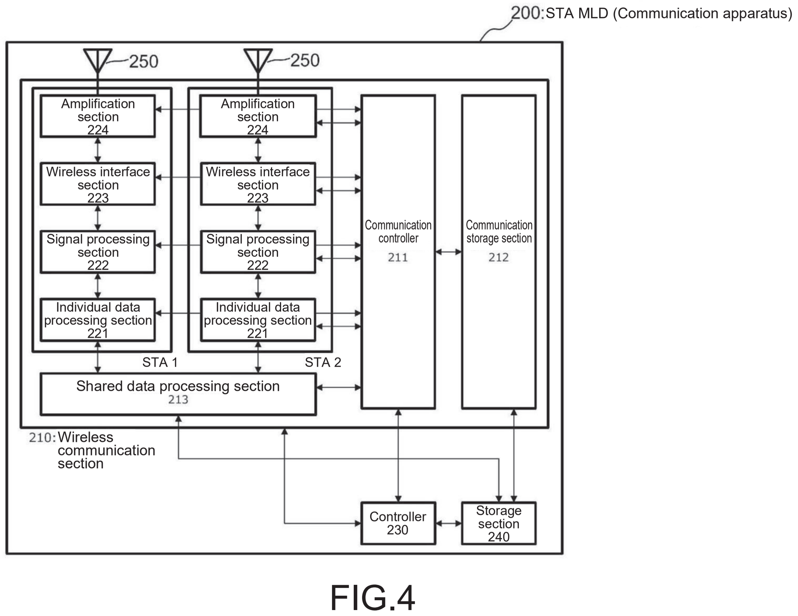

Fig. 4 is a block diagram of the STA MLD 200 corresponding to an example of a communication apparatus according to the present embodiment.

The STA MLD 200 includes a wireless communication section 210, a controller 230, a storage section 240, and a plurality of antennas 150. The wireless communication section 210 includes a communication controller 211, a communication storage section 212, a shared data processing section 213, the STA 1, and the STA 2.

The STA 1 and the STA 2 each operate as an STA affiliated with the STA MLD, and each include an individual data processing section 221, a signal processing section 222, a wireless interface section 223, and an amplification section 224. There is an STA for each link, and there are two STAs in this example. However, the number of STAs can be increased or decreased according to the number of links set at a time.

The STA 1 is an example of a first or third communication section that performs a first wireless communication in the STA MLD 200 using the first link, and the STA 2 is an example of a second or fourth communication section that performs a second wireless communication in the STA MLD 200 using the second link. In addition to the STA 1, the first or third communication section may include a function of performing STA 1-related control performed by the controller 230 and the communication controller 211, and a function of performing STA 1-related processing performed by the shared data processing section 213. Likewise, in addition to the STA 2, the second or fourth communication section may include a function of performing STA 2-related control performed by the controller 230 and the communication controller 211, and a function of performing STA 2-related processing performed by the shared data processing section 213.

The STA 1 and the STA 2 each include a pair of the amplification section 224 and the antenna 250 that form a configuration based on 1x1 single-input single-output (SISO). Note that the STA 1 and the STA 2 may each include more antennas and amplification sections to enable multi-input multi-output (MIMO) transmission-and-reception processing.

The communication controller 211 controls operations of the respective structural elements and information transmission performed between the structural elements. Further, the communication controller 211 delivers, to each individual data processing section 221 and the shared data processing section 213, control information and management information that are to be reported to another communication apparatus (the AP MLD 100).

The communication storage section 212 retains information to be used by the communication controller 211. Further, the communication storage section 212 retains data to be transmitted to another communication apparatus (such as the AP MLD) and data received from the other communication apparatus (such as the AP MLD). A transmission buffer that retains data to be transmitted is included in the communication storage section 212.

At the time of transmission, the shared data processing section 213 performs sequence management of the data retained in the communication storage section 212 and the control information and management information received from the communication controller 211, and performs, for example, processing of encrypting, for example, data. Thereafter, the shared data processing section 213 delivers, for example, the processed data to the individual data processing section 221, which has acquired a right to transmission to a space (a wireless medium). At the time of reception, the shared data processing section 213 decrypts the data received from the individual data processing section 221, and performs reorder processing. The shared data processing section 213 is also referred to as an upper MAC section.

At the time of transmission, the individual data processing section 221 adds a media access control (MAC) header and an error-detection code to, for example, the data received from the shared data processing section 213 to generate a frame. Further, the individual data processing section 221 may perform processing of coupling a plurality of frames. At the time of reception, the individual data processing section 221 performs processing of decoupling a MAC header of the received frame from another frame, and performs analysis of the MAC header and error detection on the frame. Then, the individual data processing section 221 delivers, for example, the data acquired from the frame to the shared data processing section 213. The individual data processing section 221 is also referred to as a lower MAC section. Note that the frame as used herein may also include a frame of which a type field of a frame control field in a MAC header indicates any frame type such as "data", "management", or "control."

At the time of transmission, the signal processing section 222 performs, for example, encoding, interleaving, and modulation on a frame, and adds a physical header to generate a symbol stream. At the time of reception, the signal processing section 222 analyzes the physical header, and performs, for example, demodulation, deinterleaving, and decoding on the symbol stream to obtain the frame. Further, the signal processing section 222 performs measurement processing and space separation processing on channel characteristics as necessary. The processing section 222 is also referred to as a PHY section.

At the time of transmission, the wireless interface section 223 performs digital-to-analog signal conversion, filtering, up-conversion, and phase control on a symbol stream, and generates a transmission signal. At the time of reception, the wireless interface section 223 performs down-conversion, filtering, and analog-to-digital signal conversion on a reception signal, and generates the symbol stream.

The amplification section 224 amplifies a signal input by the wireless interface section 223 or the antenna 250. A portion of the amplification section 224 may be a structural element external to the wireless communication section 210. Further, a portion of the amplification section 224 may be included in the wireless interface section 223.

The wireless interface section 223 and the amplification section 224 are also collectively referred to as an RF section.

The controller 230 controls the wireless communication section 210 and the communication controller 211. Further, on behalf of the communication controller 211, the controller 230 may perform a portion of operations performed by the communication controller 211. Furthermore, the communication controller 211 and the controller 230 may be collectively formed into a single block.

The storage section 240 retains information used by the controller 230 and the wireless communication section 210. Further, on behalf of the communication storage section 212, the storage section 240 may perform a portion of operations performed by the communication storage section 212. The storage section 240 and the communication storage section 212 may be collectively formed into a single block.

Note that, in Fig. 4, it is assumed that the wireless communication section 210 is configured as a single IC, although the configuration of the wireless communication section 210 is not limited thereto. For example, a wireless interface section may be configured as a separate IC.

Three examples are described below with respect to configurations of the AP MLD 100 and the STA MLD 200 that achieve the solving policy 1 and solving policy 2 described above. The respective examples primarily adopt different methods for measuring CSI and calculating a correlation value during blocking of an mmWave link.

In a first example, during blocking of an mmWave link, the AP 1 receives a null data packet (NDP) coming from the STA 1, measures CSI, and calculates a correlation value.

In a second example, during blocking of an mmWave link, the STA 1 receives an NDP coming from the AP 1, measures CSI, and calculates a correlation value.

In a third example, during blocking of an mmWave link, the STA 1 receives a frame including a preamble and a data portion (a control field) from the AP 1, measures CSI on the basis of the preamble according to instruction information in the control field, and calculates a correlation value.

The respective examples are described in detail below.

(First Example)

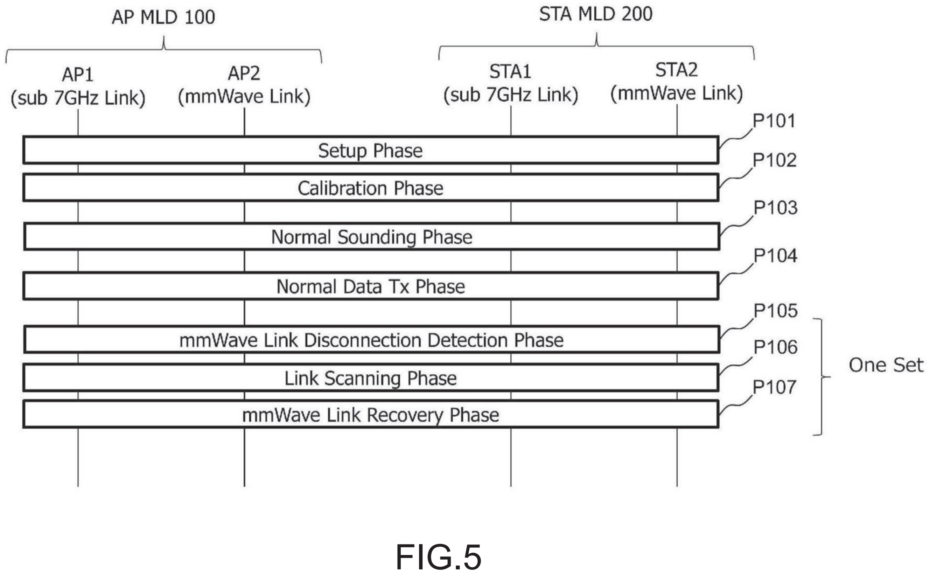

Fig. 5 is a diagram of a sequence of an overall operation according to the first example. The first example includes seven phases P101 to P107. The following are outlines of the respective phases.

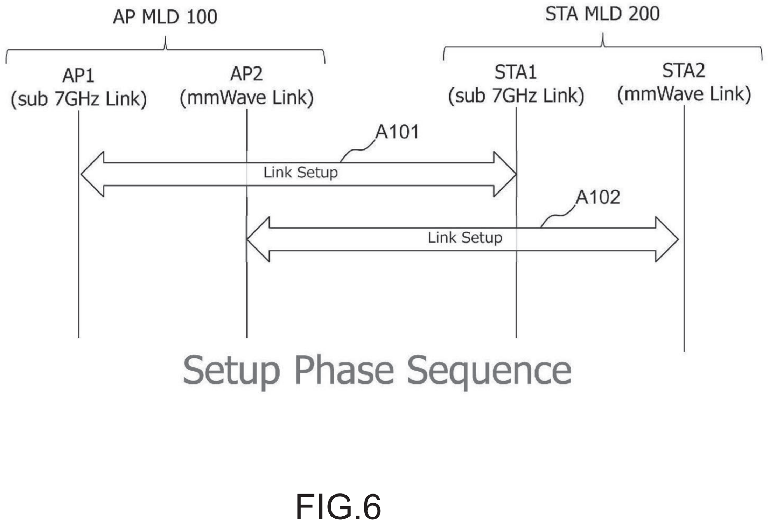

In a setup phase P101, a process of a link setup (such as authentication, connection, and generation of an encryption key) is performed between the AP 1 and the STA 1, and a process of a link setup (such as authentication, connection, and generation of an encryption key) is performed between the AP 2 and the STA 2. Details are described with reference to Fig. 6.

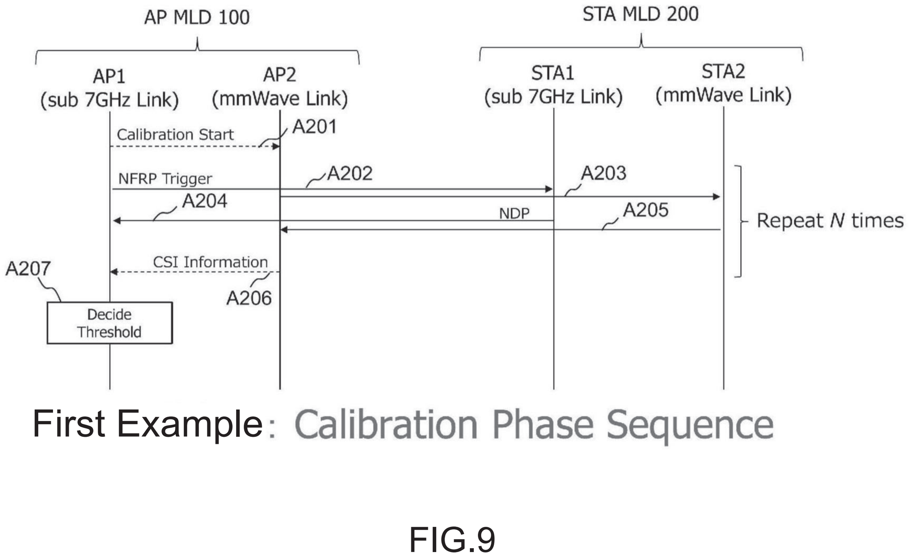

In a calibration phase P102, the AP 1 checks what a variation in CSI on a sub 7 GHz link and a variation in CSI on an mmWave link have in common, and performs calibration processing of determining a threshold (a correlation threshold) used to determine whether the CSI has a high or low correlation with previous CSI. Details are described with reference to Fig. 9.

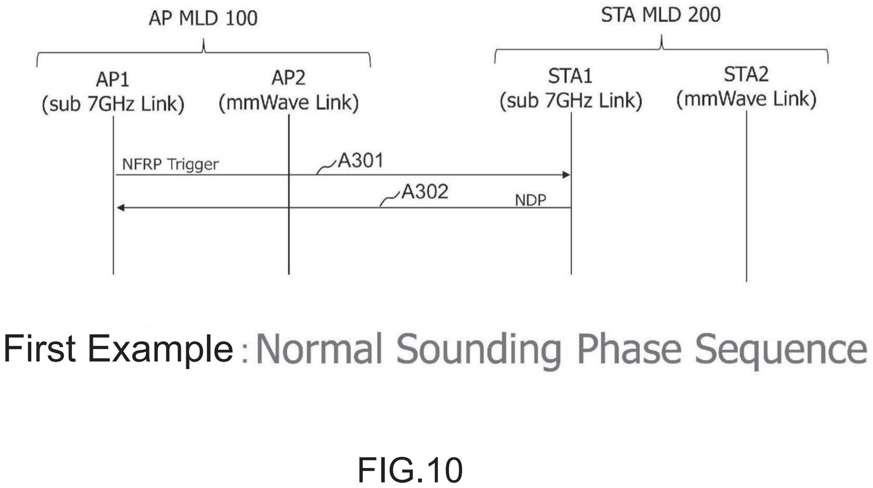

In a normal sounding phase P103, the AP 1 measures CSI regularly using the sub 7 GHz link, and performs a sounding process performed to store the measured CSI. Details are described with reference to Fig. 10.

In a normal data Tx phase P104, data transmission is performed using each of the sub 7 GHz link and the mmWave link.

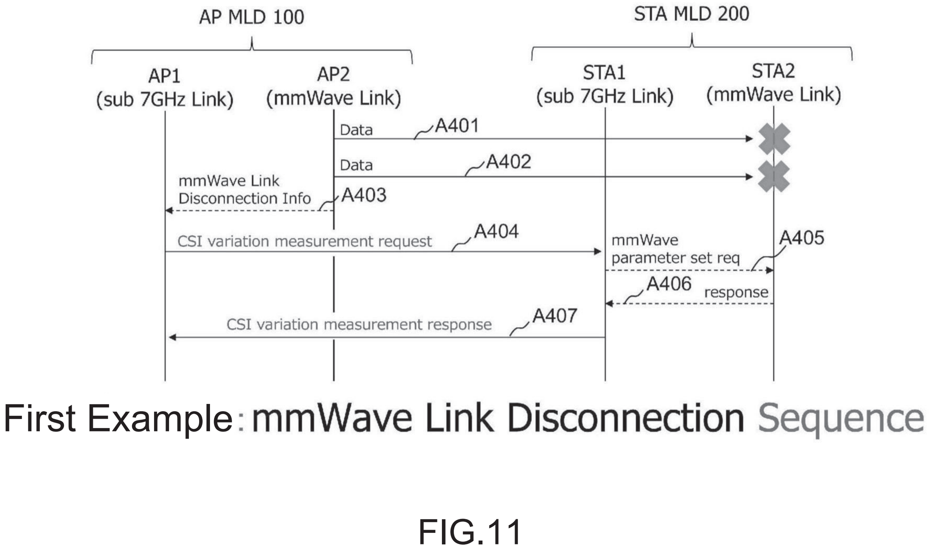

In an mmWave link disconnection detection phase P105, when the AP 2 detects blocking of the mmWave link, the AP 1 performs setting for a scanning process of detecting overcoming of the blocking, the setting being performed together with the STA 1 through the sub 7 GHz link. Details are described with reference to Fig. 11.

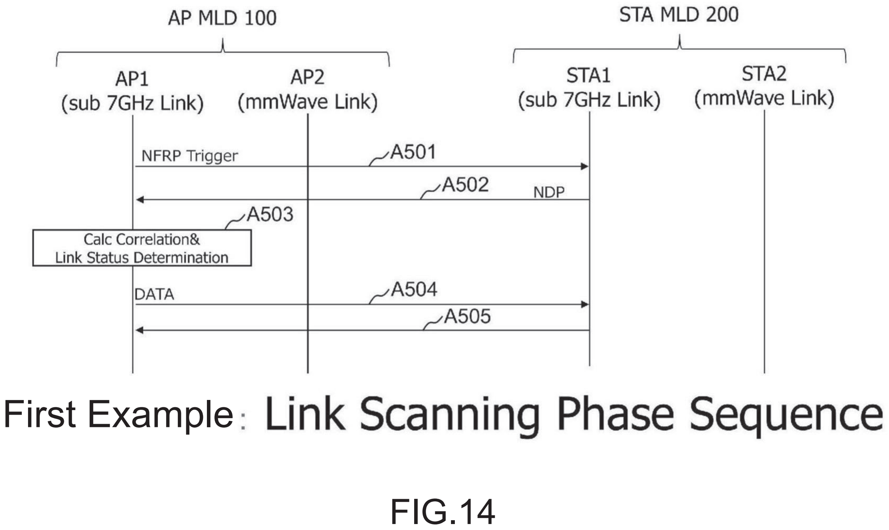

In a link scanning phase P106, the AP 1 performs a process of detecting whether the sub 7 GHz link is still blocked (a process of detecting whether there is an obstacle) using CSI for the sub 7 GHz link on the basis of the setting for the scanning process performed in the phase P105. Details are described with reference to Fig. 14.

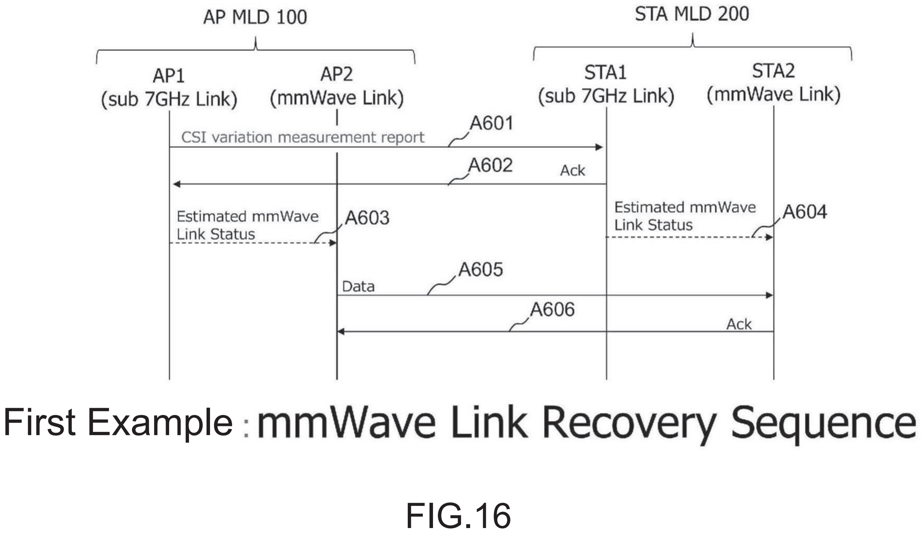

In an mmWave link recovery phase P107, after the overcoming of the blocking is detected, the AP 1 performs a process necessary until the AP 2 and the STA 2 restart data transmission using the mmWave link. Details are described with reference to Fig. 16.

Details of each phase are described below. Note that a detailed description of the normal data Tx phase P104 is omitted since an operation of general data transmission is performed in the normal data Tx phase P104. In the descriptions of operations of the respective phases, the AP 1, the AP 2, the STA 1, and the STA 2 are primarily described as entities that perform the operations. Operations for which the AP 1 and the AP 2 are primarily described as entities may include operations performed by structural elements (the shared data processing section 113, the communication controller 111, and the controller 130) that perform processing or control related to the AP 1 and the AP 2, in addition to operations performed by the AP 1 and the AP 2 themselves. In other words, the operations described as operations performed by the AP 1 and the AP 2 correspond to operations performed by the first communication section and the second communication section in the AP MLD 100 according to the present embodiment. Likewise, operations for which the STA 1 and the STA 2 are primarily described as entities may include operations performed by structural elements (the shared data processing section 213, the communication controller 211, and the controller 230) that perform processing or control related to the STA 1 and the STA 2, in addition to operations performed by the STA 1 and the STA 2 themselves. In other words, the operations described as operations performed by the STA 1 and the STA 2 correspond to operations performed by the first communication section (or the third communication section) and the second communication section (or the fourth communication section) in the STA MLD 200 according to the present embodiment.

[Setup Phase P101]

Fig. 6 illustrates an example of a sequence of the setup phase P101.

In the setup phase P101, a process of a link setup (such as authentication, connection, and generation of an encryption key) is performed between the AP 1 and the STA 1 (A101), and a process of a link setup (such as authentication, connection, and generation of an encryption key) is performed between the AP 2 and the STA 2 (A102). A sub 7 GHz link (the link 1) is set between the AP 1 and the STA 1, and an mmWave link (the link 2) is set between the AP 2 and the STA 2. Fig. 6 illustrates an example in which the link setup is performed between the AP 1 and the STA 1 and the link setup is performed between the AP 2 and the STA 2. However, a frame used for the link setup may be exchanged using one of the links, and information regarding the link setup to be performed using another of the links may be exchanged by being included in the exchanged frame to complete the process of the link setup without exchanging a frame using the other of the links.

In the present embodiment, any frame exchanged by the process of a link setup includes capability information for a sub 7 the GHz link (information indicating capability of the AP MLD or the STA MLD for a sub 7 GHz link). Accordingly, pieces of capability information are exchanged between the AP 1 and the STA 1. Likewise, any frame exchanged by the process of a link setup includes capability information for an mmWave link (information indicating capability of the AP MLD or the STA MLD for an mmWave link). Accordingly, pieces of capability information are exchanged between the AP 2 and the STA 2. As described above, these pieces of capability information may be exchanged by the processes of link setups for the respective links, or may be exchanged by the process of a link setup for one of the links. In the latter case, the capability information for a sub 7 GHz link and the capability information for an mmWave link may be stored in one frame.

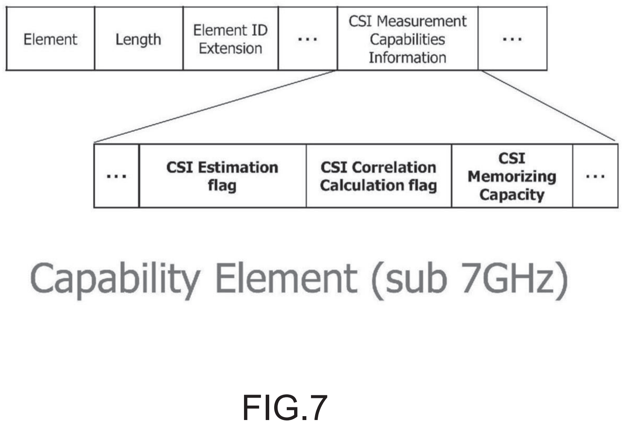

Fig. 7 illustrates an example of a configuration of a capability element (a sub 7 GHz link) that is an example of capability information for a sub 7 GHz link. Here, the capability element is described on the basis of an element of IEEE802.11. However, the capability information is not limited to this frame configuration, and may include at least a portion of information described below.

CSI Estimation flag: Flag information that indicates an ability or inability to perform CSI measurement for a link (capability to measure a channel). When determination is "false" (inability) for both the AP 1 and the STA 1, the subsequent processes of and after the phase P102 are not performed.

CSI Correlation Calculation flag: Flag information that indicates an ability or inability to calculate a correlation value of a correlation with CSI for a previous link (previous CSI) (capability to calculate a correlation value). When determination is "false" (inability) for both the AP 1 and the STA 1, the subsequent processes of and after the phase P102 are not performed.

CSI Memorizing Capacity: information that indicates a capacity available to store previous CSI (a capacity available to store channel state information). The capacity is represented by, for example, the number or the size.

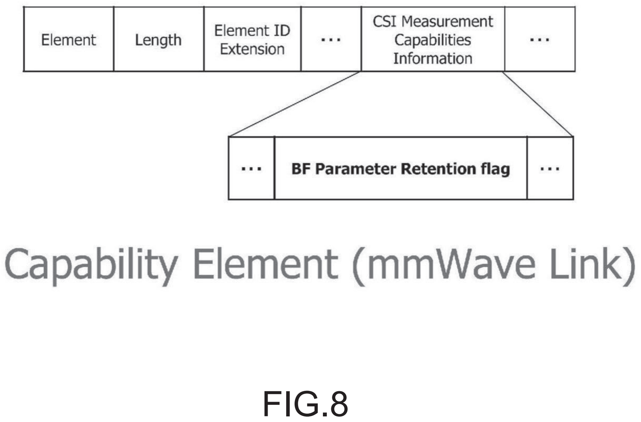

Fig. 8 illustrates an example of a configuration of a capability element that is an example of capability information for an mmWave link. Here, the capability element is described on the basis of an element of IEEE802.11. However, the capability information is not limited to this frame configuration, and may include at least information described below.

BF Parameter Retention flag: Flag information that indicates whether a BF parameter that is currently being used can be retained (stored) (capability to retain a BF parameter).

[Calibration Phase P102]

Fig. 9 illustrates an example of a sequence of the calibration phase P102. In this sequence, the AP 1 and the AP 2 each measure CSI multiple times, where the AP 1 and the AP 2 respectively perform the measurements using a sub 7 GHz link and an mmWave link at the same time (in parallel with each other). A correlation threshold used to detect the presence of an obstacle that blocks wireless communication performed using an mmWave link is determined on the basis of a result of measuring CSI multiple times on each channel. More particularly, the following determination is performed.

First, when the AP 1 and the AP 2 each acquire, in the AP MLD 100, a right to transmission to a wireless medium, the AP 1 reports information regarding calibration start (such as address information regarding an address of the STA MLD 200 and the number of times that measurement is performed) to the AP 2 (the report can also be performed in the reverse direction) (A201). Thereafter, the AP 1 and the AP 2 respectively transmit NDP feedback report poll (NFRP) trigger frames to the STA 1 and the STA 2 (A202, A203), and respectively receive null data packets (NDPs) from the STA 1 and the STA 2 (A204, A205). The AP 1 and the AP 2 respectively measure pieces of CSI on the basis of the respectively received NDPs, and the AP 2 reports the measured piece of CSI to the AP 1 (A206). After the above-described sequence of A202 to A205 is repeated multiple times (N times), the AP 1 detects the presence of an obstacle, that is, the AP 1 determines a correlation threshold used to detect whether there is blocking (A207).

The correlation threshold can be determined on the basis of at least one of the interconnection between variations of pieces of CSI for the two links, or speeds of the variations. When, for example, there is a great change in CSI for an mmWave link (such as a change with a change rate that exhibits a specified value or greater), a correlation value of a correlation between CSI for a sub 7 GHz link before the great change and CSI for the sub 7 GHz link after the great change is calculated. The calculated correlation value is set to be a correlation threshold. As described above, the AP 1 acquires a plurality of pieces of channel state information (CSI) for a sub 7 GHz link (a first link) at a plurality of points in time, and the AP 2 acquires a plurality of pieces of CSI for an mmWave link (a second link) at the plurality of points in time. Then, the AP 1 selects a piece of CSI for the sub 7 GHz link on the basis of a point in time before a variation in a value of CSI for the mmWave link and a piece of CSI for the sub 7 GHz link on the basis of a point in time after the variation, and determines a correlation value of a correlation between the selected pieces of CSI as a correlation threshold. When the process of this phase is performed, an obstacle such as a person may be caused to actually pass between the AP MLD 100 and the STA MLD 200. The method for calculating a correlation threshold is not limited to this example. Specific examples of the calculation of a correlation threshold will be described later.

Note that a timing at which the process of the phase P102 is performed is not particularly limited. For example, the process of the phase P102 may be performed immediately after a link setup, or may only be performed when an mmWave link is blocked for the first time since data transmission in the phase P104 was started. Further, the process of the phase P102 may be performed again when there is a change in a beam direction used on an mmWave link.

[Normal Sounding Phase P103]

Fig. 10 illustrates an example of a sequence of the normal sounding phase P103. As in the case of the calibration phase P102, the AP 1 transmits an NFRP trigger (A301) to cause an NDP to be transmitted by the STA 1 (A302). The AP 1 measures CSI on the basis of the NDP received from the STA 1, and saves the measured CSI in association with identification information (a CSI ID). The CSI ID may be a value set by the AP 1 discretionarily. The destination to save the CSI may be the storage section 140 or the communication storage section 112. The CSI saved here corresponds to CSI for a sub 7 GHz link before occurrence of blocking, that is, before a reduction in a quality of wireless communication using an mmWave link is detected.

Note that the sounding process performed to determine a transmission weight necessary for a precoding process performed by the AP 1 may be performed at the same time as or separately from the process illustrated in Fig. 10. The transmission weight is an example of a transmission parameter. If implicit sounding is adopted, the process illustrated in Fig. 10 will cover processes until determination of a transmission weight. If explicit sounding is adopted, it will be necessary for the AP 1 to transmit an NDP to the STA 1 and to cause the STA 1 to feed back a BF report. The process illustrated in Fig.

10 and the sounding process performed to determine a transmission weight may be performed with the same degree of frequentness or with different degrees of frequentness.

[mmWave Link Disconnection Phase P105]

Fig. 11 illustrates an example of a sequence of the mmWave link disconnection phase P105. In the sequence illustrated in Fig. 11, when the AP 2 fails to perform data transmission using an mmWave link a specified number of times or more (when the AP 2 does not receive an acknowledgment (ack) from the STA 2), the AP 2 detects a reduction in a quality of wireless communication performed using the mmWave link. The AP 2 performs processing of starting detecting whether there is blocking on a sub 7 GHz link (whether there is an obstacle that blocks wireless communication). The reduction in communication quality is not limited to the case in which an ack is not received. For example, the reduction in communication quality may be detected when a bit error rate is greater than a specified value, may be detected when a rate of retransmission of a frame is greater than or equal to a specified value, or may be detected in other cases. This phase is described in more detail below.

When the AP 2 fails to perform data transmission using the mmWave link a specified number of times or more (A401, A402), the AP 2 determines that a quality of wireless communication performed using the mmWave link has been reduced, and communicates, to the AP 1, "mmWave Link Disconnection Info" used to request the AP 1 to detect whether the mmWave link is blocked (A403). Accordingly, a request to detect the presence of an obstacle using the sub 7 GHz link is made to the AP 1. Thereafter, the AP 1 transmits a frame of a CSI variation measurement request to the STA 1 (A404).

This frame includes the following information. * Information indicating which of the entities (the AP 1 or the STA 1) measures CSI on a sub 7 GHz link and calculates a correlation value

Information indicating whether a BF parameter that is currently being used by the STA 2 is to be retained by the STA 2

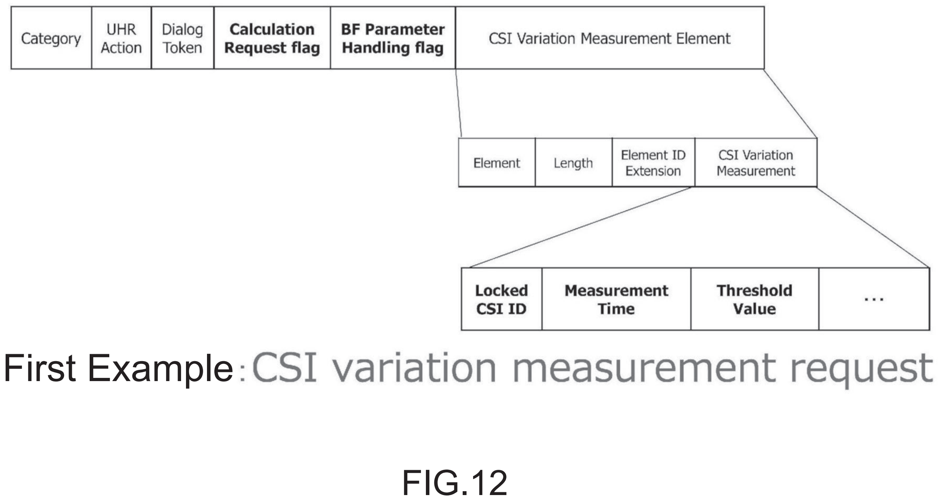

This frame will be described in detail with reference to Fig. 12.

Note that, in second and third examples described later in which measurement of CSI and calculation of a correlation value are performed by the STA 1 during blocking of an mmWave link, the frame includes information necessary to cause the STA 1 to measure CSI and calculate a correlation value.

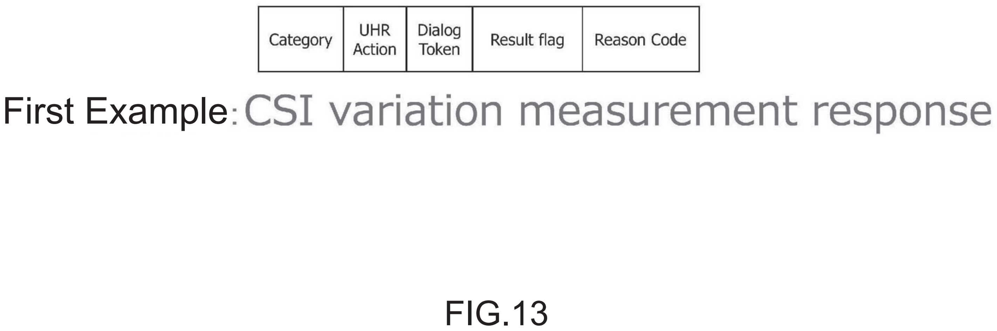

When the STA 1 receives the frame, the STA 1 exchanges pieces of information with the STA 2 (A405, A406), and thereafter, the STA 1 transmits a frame of a CSI variation measurement response to the AP 1. The following is an example of the exchange of pieces of information: for example, the STA 1 may transmit, to the STA 2, instruction information regarding an instruction that the STA 2 is to retain a currently used BF parameter, and the STA 2 may transmit, to the STA 1, a report about completion of retention of the BF parameter after retaining the BF parameter. This frame will be described in detail with reference to Fig. 13.

Note that, in this example, it is assumed that the AP 2 stops all of frame transmission until it is confirmed that blocking on a sub 7 GHz link has been overcome. However, the AP 2 may also regularly transmit a signal used to detect the overcoming of the blocking, if possible. Alternatively, the AP 2 may continue data transmission. Further, depending on, for example, power consumption and heat generation of the AP MLD 100, the AP 1 or the AP 2 may judge and determine whether these operations are to be performed and how frequently these operations are to be performed.

Fig. 12 illustrates an example of a frame configuration of the CSI variation measurement request. Actually, a MAC header is added to the configuration illustrated in Fig. 12. Here, the configuration example is described on the basis of an action frame of IEEE802.11. However, the frame configuration is not limited to the configuration illustrated in Fig. 12, and the frame may include at least a portion of information described below. Further, 'UHR" in "UHR Action" in the figure may be another standard name.

Calculation Request flag: Flag information indicating whether to request an STA (the STA 1) to measure CSI and calculate a correlation value. In the first example, this flag information is assumed to indicate "false" (not making a request to the STA 1). In the second and third examples, this flag information is assumed to indicate "true" (making a request to the STA 1).

BF Parameter Handling flag: Flag information indicating whether a BF parameter that is being used on an mmWave link is to be retained without being deleted. When the flag information indicates "true", this means retention, and when the flag information indicates "false", this means deletion. When the "BF Parameter Retention flag" described with reference to Fig. 8 described above indicates "false", this flag information indicates "false" at all times.

CSI Variation Measurement Element: An element that includes information necessary to request an STA to measure CSI and calculate a correlation value. There is no need for this element in the first example. The following are contents of the element.

Locked CSI ID: This is identification information regarding CSI used by the STA 1 as a channel state before blocking occurs. It is necessary for the STA 1 to keep on storing the CSI without deleting the CSI until channel measurement (hereinafter referred to as CSI estimation) is finished.

Measurement Time: Measurement time to measure CSI (that is, a length of time to measure CSI).

Threshold Value: A threshold (a correlation threshold) used to determine whether there is blocking. Only when a calculated correlation value is greater than or equal to the correlation threshold, the STA 1 may return "CSI Correlation Feedback" described later. Setting can be performed such that feedback is returned at all times when a value is "0." The correlation threshold may be set for every two pieces of CSI. In other words, a correlation threshold compared to a correlation value of a correlation between currently measured CSI and CSI specified by a locked CSI ID and measured before blocking occurs (before a reduction in communication quality is detected), and a correlation threshold compared to a correlation value of a correlation between the currently measured CSI and most recently measured CSI (CSI measured immediately before the currently measured CSI) may be set separately.

Fig. 13 illustrates an example of a frame configuration of a CSI variation measurement response. Actually, a MAC header is added to the configuration illustrated in Fig. 12. Here, the configuration example is described on the basis of an action frame of IEEE802.11. However, the frame configuration is not limited to the configuration illustrated in Fig. 13, and the frame may include at least a portion of information described below. Further, 'UHR' in "UHR Action" in the figure may be another standard name.

Result flag: Flag information indicating whether a requested CSI measurement is to be performed by the STA 1.

Reason Code: Information indicating a reason that the CSI measurement is not to be performed when the flag information described above indicates "false". For example, the reason that current processing burdens imposed on the STA 1 are heavy is conceivable.

[Link Scanning Phase P106]

Fig. 14 illustrates an example of a sequence of a link scanning phase. In the sequence illustrated in Fig. 14, the AP 1 measures CSI for a sub 7 GHz link (A501, A502) by a procedure similar to the procedure in Fig. 10. Then, the AP 1 calculates a correlation value of a correlation between the measured CSI and previous CSI, and determines, as a channel state of an mmWave link, whether blocking has been overcome (whether there is no longer an obstacle that blocks wireless communication) (A503). After the determination, data transmission is performed between the AP 1 and the STA 1 using the sub 7 GHz link (A504, A505). Note that a timing at which the processes of Steps A501 to A503 are performed is dependent on the AP 1, and the processes of Steps A501 to A503 may be performed every time a right to transmission to a wireless medium is acquired, or every time the data transmission is started. As the processes of Steps A501 to A503 are performed more frequently, overcoming of blocking can be detected more quickly, but overhead is increased. Thus, an optimal execution interval may be determined according to, for example, a traffic state, or a history of detection of blocking and overcoming of blocking in the past.

For example, the time-reversal resonating strength (TRRS) also disclosed in Non-Patent Literature 1 can be used as a method for calculating a correlation value. Specifically, for example, FFT processing is performed on CSI for each communication channel to convert the CSI into a channel impulse response (CIR), and calculation is performed using a formula (1) indicated below between $h_1$ and $h_2$ that represent two CIRs for which a correlation value is calculated.
[Math. 1]

$$\eta(h1, h2) = \frac{\max_i |(h_1 * g_2)[i]|}{\sqrt{\sum_{i=0}^{L-1} |h_1[i]|^2} \sqrt{\sum_{j=0}^{L-1} |g_2[j]|^2}} \quad (1)$$

Here, L represents the number of FFT samples, and $g_2$ is represented by time reversal and conjugate of $h_2$ as represented using a formula (2) described below.
[Math. 2]

$$g_2[k] = h_2^*[L - 1 - k], k = 0, 1, \ldots, L - 1 \quad (2)$$

A correlation value of a correlation between respective communication channels (a current communication channel and a past communication channel for a sub 7 GHz link in this example) is calculated. With respect to comparison with a correlation threshold, when CSI is measured multiple times, it may be determined whether all of calculated correlation values are each greater than or equal to a correlation threshold, or it may be determined whether one of the correlation values is greater than or equal to the correlation threshold.

Further, the method for calculating a correlation value is not limited to the example described above, and any method using a formula that makes it possible to obtain the following correlation value may be used: the correlation value is "0" when there is no variation in CSI or it is considered that there is no variation in CSI, and the correlation value is increased as the CSI varies more greatly.

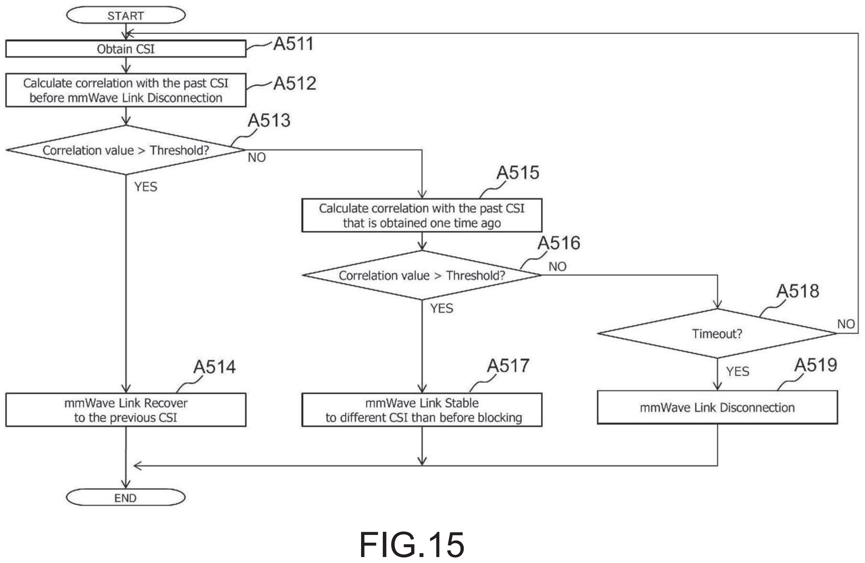

Fig. 15 is a detailed flowchart of Step A503 illustrated in Fig. 14.

First, the AP 1 acquires CSI by CSI measurement (A511), and calculates a correlation value of a correlation between the acquired CSI and CSI measured before blocking occurs (CSI specified by a locked CSI ID) (A512). In other words, the AP 1 acquires a correlation value of a correlation between CSI (first channel-state information) acquired at a first point in time after a reduction in a communication quality of a second link is detected, and CSI (second channel-state information) acquired at a second point in time before the reduction in the communication quality of the second link is detected.

When the correlation value is greater than or equal to a correlation threshold (YES in A513), the AP 1 determines that the blocking has been overcome and that an mmWave link returns to a state that is the same as or equivalent to a state before the blocking occurs (A514).

When the correlation value is less than the correlation threshold (NO in A513), a correlation value of a correlation between the acquired CSI and CSI acquired immediately before the current measurement (most recent CSI) (A515). In other words, the AP 1 acquires a correlation value of a correlation between CSI (first channel-state information) acquired at a first point in time after a reduction in a communication quality of the second link is detected, and CSI (third channel-state information) acquired at a third point in time after a reduction in a communication quality of the second link is detected, the third point in time being earlier than the first point in time.

When the correlation value calculated in Step A515 is greater than or equal to the correlation threshold (YES in A516), the AP 1 determines that a channel state of the mmWave link is a state different from the channel state before blocking occurs and that has become stable (A517). For example, the mmWave link gets into such a state when an obstacle that causes blocking stands still in front of the AP MLD 100, or when blocking is overcome but there is a great change in a surrounding environment.

When the correlation value calculated in Step A515 is less than the correlation threshold, the processes described above are repeated until elapse of the measurement time (NO in A518). When the measurement time has elapsed (YES in A518), the AP 1 determines that it is difficult to re-establish the mmWave link since the link is still continuously blocked (there is still the obstacle blocking wireless communication performed using the link).

[mmWave Link Recovery Phase P107]

Fig. 16 illustrates an example of a sequence of the mmWave link recovery phase P107. This example is an example of a sequence when it is determined, by the determination processing illustrated in Fig. 15 described above, that blocking has been overcome and that a channel state of an mmWave link has returned to the channel state before the blocking occurs (refer to Step A514). The AP 1 transmits a frame of a CSI variation measurement report to the STA 1 in order to report to the STA 1 about information indicating that the channel state of the mmWave link has returned to its original state (A601).

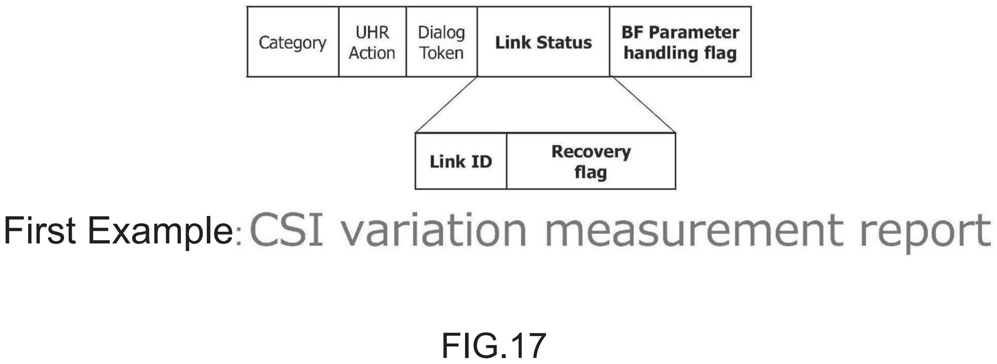

Fig. 17 illustrates an example of a frame configuration of a CSI variation measurement report. Actually, a MAC header is added to the frame configuration illustrated in Fig. 17. Here, the example of the frame configuration is described on the basis of an action frame of IEEE802.11. However, the frame configuration is not limited to the configuration illustrated in Fig. 17, and the frame may include at least a portion of information described below. Further, 'UHR' in "UHR Action" in the figure may be another standard name.

Link Status: This is information regarding re-establishment of a link. A set of a link ID (identification information) and a re-establishment flag. The link ID is an ID of a link (an mmWave link) that is to be re-established. There may be a plurality of the sets. The re-establishment flag indicates "true" when a channel state of the mmWave link returns to a state before blocking occurs (refer to Step A514 in Fig. 15) or when the channel state of the mmWave link has been changed to a state different from the channel state before the blocking occurs (refer to Step A517 in Fig. 15). In other words, the re-establishment flag indicates "true" when it is determined that there are not any obstacles that block wireless communication performed using the mmWave link. On the other hand, the re-establishment flag indicates "false" when it is determined that blocking occurs on the mmWave link (there is an obstacle that blocks wireless communication performed using the mmWave link) (refer to Step A519 in Fig. 15).

BF Parameter Handling flag: Flag information indicating whether a BF parameter used on the side of the mmWave link before blocking occurs is also reusable with no change after the link is re-established (after the blocking is overcome). The BF parameter is reusable when the flag information indicates "true" (the BF parameter is retained), and the BF parameter is not reusable when the flag information indicates "false" (the BF parameter has been deleted). When the "BF Parameter Retention flag" illustrated in Fig. 12 described above indicates "false" (not retained), the field of BF Parameter Handling flag indicates "false" at all times. The flag information "true" is an example of information indicating that a BF parameter used before blocking occurs (before a reduction in a quality of wireless communication is detected) is reusable. The flag information "false" is an example of information indicating that the BF parameter used before the blocking occurs (before the reduction in the quality of wireless communication is detected) is not reusable (there is a need to redetermine a BF parameter).

The STA 1 transmits an acknowledgment (ack) (A602), and thereafter, the AP 1 and the STA 1 respectively report similar pieces of result information to the AP 2 and the STA 2 (A603, A604). The AP 2 and STA 2 having understood that the state of the mmWave link has returned to its original state perform a procedure of re-establishing the mmWave link, and restart data transmission (A605, A606). When the BF parameter is retained (when the BF parameter is reusable), the AP 2 and the STA 2 reuse the retained parameter to perform beamforming together. When the BF parameter is not retained (when the BF parameter is not reusable), the AP 2 and the STA 2 perform a BF training together again to redetermine a BF parameter.

The example in which blocking of an mmWave link (the link 2) is overcome and the mmWave link returns to a state before the blocking occurs has been described with reference to the sequence illustrated in Fig. 16. When it is determined that the state of the mmWave link has been changed to a state different from the state before the blocking occurs (refer to Step A517), a BF training may be performed again, or processing of disconnecting the mmWave link may be performed without using the link. In this case, processing is newly performed starting with resetting the link. In order to give an instruction to perform a BF training again, the BF Parameter Handling flag may be caused to indicate "false", or a field used to give an instruction to perform a training again may be defined separately. Further, in order to perform processing of disconnecting the link, the re-establishment flag may be caused to indicate "false", or a field used to give an instruction to perform disconnection processing may be defined separately. After the mmWave link returns to a state different from the state before blocking occurs, or after the mmWave link is disconnected, the AP 1 may also transmit a CSI variation measurement request to the STA 1 again (Step A404 in Fig. 11), and may repeat the subsequent processes to check the state of the mmWave link using a sub 7 GHz link. As a result, an obstacle that stands still in front of the AP MLD 100 moves again, and this makes it possible to quickly detect a state in which blocking of the mmWave link is overcome. When the overcoming of blocking is detected, the AP 2 and the STA 2 may perform a BF training again. Alternatively, if the AP 2 and the STA 2 are allowed to keep on retaining a BF parameter used before blocking occurs, the BF training can be omitted by using the retained BF parameter. Note that, when it is determined that a channel state of an mmWave link has been changed to a state different from the channel state before blocking occurs, the BF Parameter Handling flag may be caused to indicate "true", and the same BF parameter may be used.

When it is determined, by the sequence illustrated in Fig. 16, that blocking of the mmWave link has not been overcome yet (refer to Step A519), the re-establishment flag is caused to indicate "false." In this case, the AP 2 and the STA 2 may wait for overcoming of blocking by repeating the processes of and after Step A404 in Fig. 11, or may perform processing of disconnecting the mmWave link.

(Second Example)

The second example is an example when, during blocking of an mmWave link, the STA 1 receives a null data packet (NDP) coming from the AP 1, measures CSI, and calculates a correlation value.

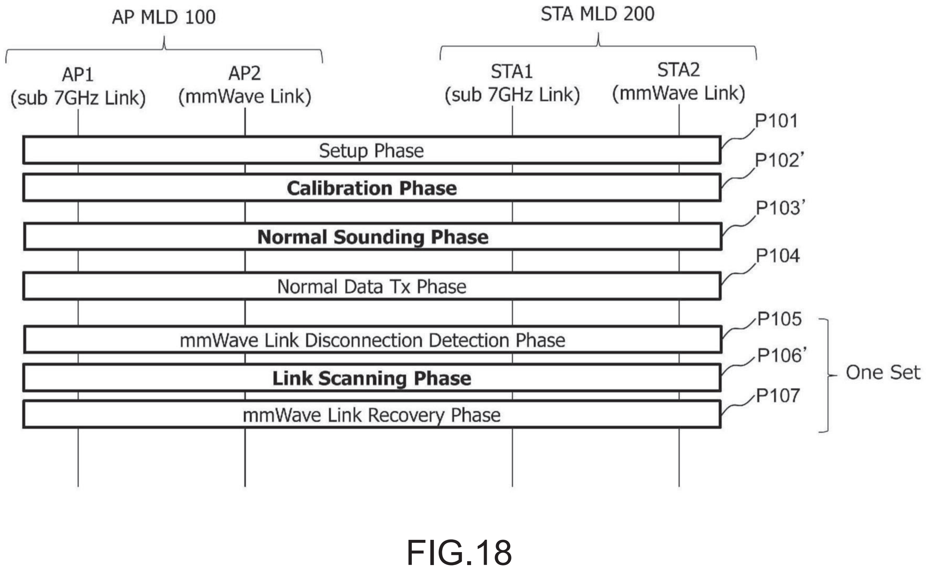

Fig. 18 illustrates an example of an overall sequence according to the second example. A calibration phase P102', a normal sounding phase P103', and a link scanning phase P106' that are different from those of the first example, are described in this example. Other phases are similar to the first example. Thus, descriptions thereof are omitted.

[Calibration Phase P102']

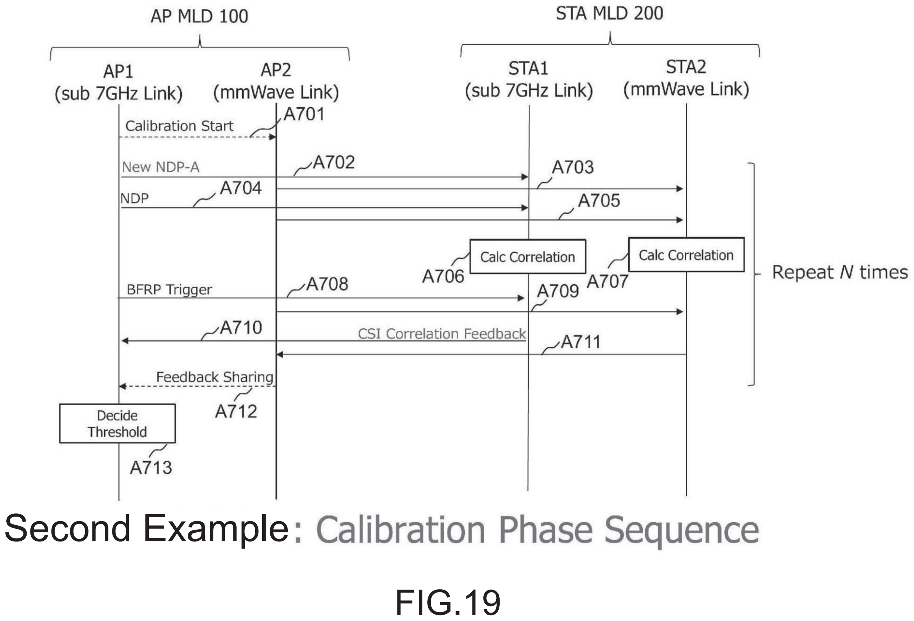

Fig. 19 illustrates an example of a sequence of the calibration phase P102' in the second example. In the sequence illustrated in Fig. 19, the AP 1 and the AP 2 each cause CSI to be measured multiple times, where the AP 1 and the AP 2 respectively cause the STA 1 and the STA 2 to perform the measurements using a sub 7 GHz link and an mmWave link at the same time. On the basis of the pieces of measured CSI, the AP 1 determines a correlation threshold used to detect the presence or absence of an obstacle that blocks wireless communication performed using an mmWave link (whether there is blocking).

First, when the AP 1 and AP 2 included in the AP MLD 100 each acquire a right to transmission to a wireless medium, the AP 1 reports information regarding calibration setup (such as address information regarding an address of the STA MLD 200 and the number of times that measurement is performed) to the AP 2 (the report can also be performed in the reverse direction) (A701). Thereafter, the AP 1 and the AP 2 respectively transmit new NDP-A frames described later to the STA 1 and the STA 2 respectively using a sub 7 GHz link and an mmWave link (A702, A703). Note that the frame may be transmitted only using one of the links.

Next, the AP 1 and the AP 2 respectively transmit NDPs to the STA 1 and the STA 2 respectively using the sub 7 GHz link and the mmWave link (A704, A705). The STA 1 and the STA 2 respectively measure pieces of CSI on the basis of the respectively received NDPs. Further, each of the STA 1 and the STA 2 calculates a correlation value of a correlation between the measured CSI and CSI previously measured and stored in itself (previous CSI) (A706, A707). Identification information (a CSI ID) regarding the previous CSI may be specified by the AP 1 using the new NDP-A frame. At least one piece of identification information regarding the previous CSI may be specified.

Next, the AP 1 and the AP 2 respectively transmit BFRP Trigger frames to the STA 1 and the STA 2 respectively using the sub 7 GHz link and the mmWave link (A708, A709). Each of the STA 1 and the STA 2 uses a resource specified by the received BFRP trigger to transmit a CSI Correlation Feedback frame including the measured CSI or the calculated correlation value or both of them (A710, A711). The AP 2 acquires the CSI or correlation value included in the CSI Correlation Feedback frame, or both of them, and reports the acquired CSI or correlation value, or both of them to the AP 1 (A712).

After the processes of Steps A702 to A712 described above are performed repeatedly multiple times, the AP 1 determines a correlation threshold used to detect whether there is an obstacle. A method for determining a correlation threshold may be similar to that in the first example. The example of determining a correlation threshold using CSI has been described in the first example. However, a correlation threshold may be determined using correlation values respectively acquired from the STA 1 and the STA 2. For example, a correlation value for the STA 1 that is obtained at a point in time at which there is a great change in a correlation value for the STA 2, may be determined to be a correlation threshold.

The BFRP Trigger frame described above may be transmitted only when there is a plurality of transmission-target STA MLDs. For example, a BFRP Trigger frame does not necessarily have to be transmitted when there is one STA MLD, as in this example. Further, the BFRP Trigger frame may be transmitted only using one of the links. Likewise, CSI Correlation Feedback may be transmitted only using one of the links. Furthermore, instead of feeding back a measurement value and a correlation value for each measurement of CSI, pieces of CSI and correlation values for CSI measured multiple times may be included in a single CSI Correlation Feedback frame and the single CSI Correlation Feedback Frame may be transmitted. This makes it possible to reduce the number of times that a CSI Correlation Feedback frame is transmitted.

Note that a timing at which the process of the phase P102' is performed is not particularly limited. For example, the process of the phase P102' may be performed immediately after a link setup, or may only be performed when a communication performed using an mmWave link is blocked for the first time since data transmission in the phase P104 was started. Further, the process of the phase P102' may be performed again when there is a change in a beam direction used on an mmWave link.

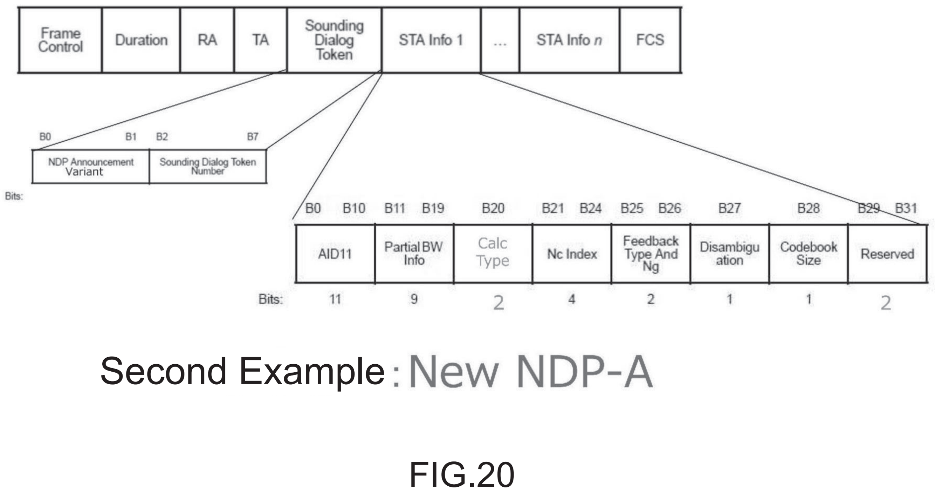

Fig. 20 illustrates an example of a frame configuration of a new NDP-A. Here, the example of the frame configuration is described on the basis of an NDP announcement frame of IEEE802.11be. However, a configuration of the new NDP-A is not limited to this frame configuration, and the frame may include at least a portion of information described below.

Sounding Dialog Token: Information indicating a version of an NDP-A, and information regarding a processing number are included. A first half "NDP Announcement Variant" indicates that the type of corresponding specifications of this frame (such as HE, EHT, and UHR), and a latter half "Sounding Dialog Token Number" indicates a processing number.

Basically, the latter half "Sounding Dialog Token Number is applied to the CSI ID.

Calc Type: Information used to indicate details of information to be fed back on the basis of an NDP. For example, "01" indicates CSI only, "10" indicates a correlation value of a correlation with previous CSI, and "11" indicates both CSI and the correlation value of a correlation with previous CSI. Note that CSI to be fed back may be uncompressed information (original information) or may be compressed information.

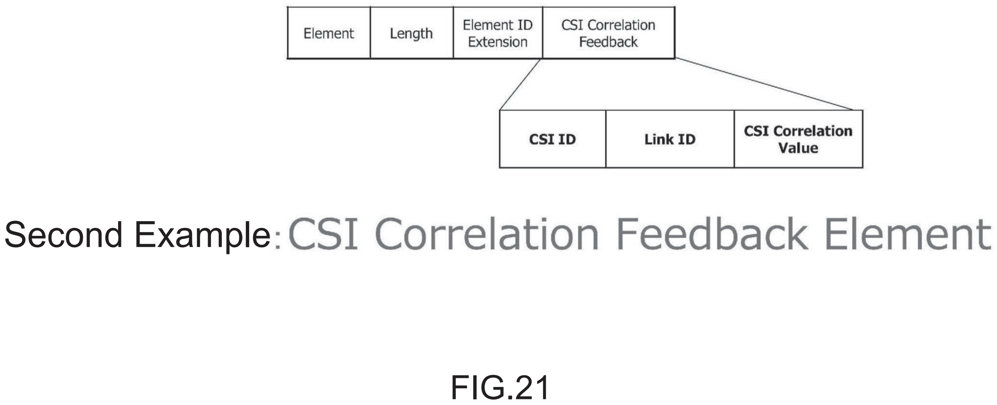

Fig. 21 illustrates an example of a configuration of a CSI correlation element included in a CSI Correlation Feedback frame. CSI measured by the STA (the STA 1 or the STA 2) and a correlation value calculated by the STA are included in the CSI correlation element. The CSI Correlation Feedback frame includes the element or a plurality of the elements. The number of the elements can be adjusted according to the number of correlation values fed back at a time (and/or the number of pieces of CSI fed back at a time). Here, the example of the configuration of the element is described on the basis of an element of IEEE802.11. However, the configuration of the element is not limited to this frame configuration, and the frame may include at least a portion of information described below.

CSI ID: Identification information used to identify at least a previous one of two pieces of CSI for which correlations are calculated. Basically, the "Sounding Dialog Token Number" of the new NDP-A (the processing number described above) is applied as the CSI ID. The CSI ID field may include not only the identification information regarding previous CSI but also pieces of identification information of two pieces of CSI for which correlations are calculated.

Link ID: Identification information regarding a link.

CSI Correlation Value: Correlation value of a correlation with previous CSI. When CSI is fed back, a field of CSI is added separately.

[Normal Sounding Phase P103']

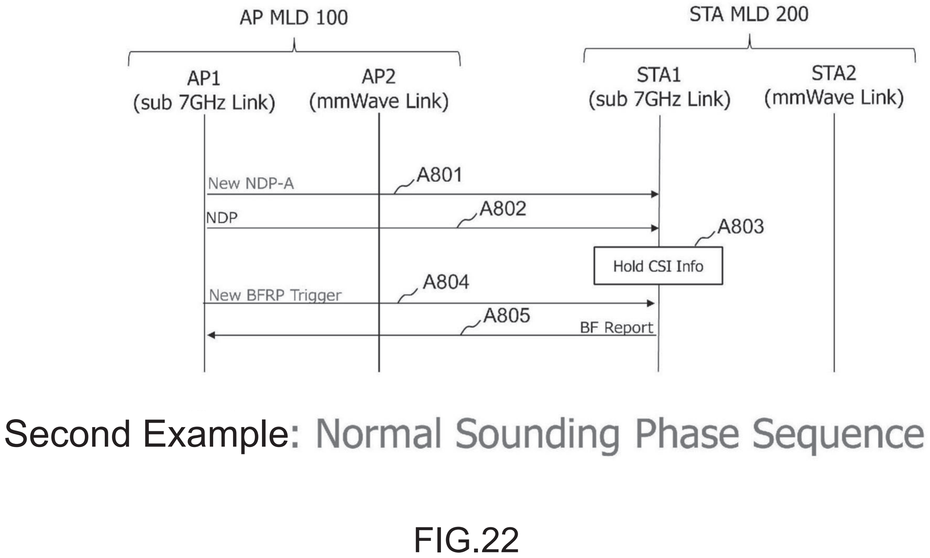

Fig. 22 illustrates an example of a sequence of the normal sounding phase in the second example. Here, as in the case of the calibration phase P102', the AP 1 transmits a new NDP-A frame and an NDP (A801, A802), causes the STA 1 to measure CSI, and further causes the STA 1 to retain the measured CSI temporarily (A803). The NDP transmitted in Step A802 corresponds to a second packet used for CSI measurement. The new NDP-A frame transmitted in Step A801 includes second instruction information used to give instructions to measure CSI using a sub 7 GHz link before an mmWave link is blocked (before the quality of wireless communication performed using an mmWave link is reduced), and to store the measured CSI. The AP 1 transmits a new BFRP Trigger frame to the STA 1 (A804) to cause the STA 1 to transmit a BF report frame including the measured CSI (A805). Note that the BF report frame may have a configuration of only including CSI or may have a configuration of including both CSI and a correlation value. Which of the configuration is to be used can be specified by the "Calc Type" field of the new NDP-A described above.

The number of pieces of CSI retained by the STA 1 in Step A803 is dependent on a memory capacity secured by the STA 1 for this process. When there is a lack of capacity, CSI may be deleted in chronological order. Note that, when a CSI variation measurement request (refer to Fig. 12) is reported to the STA 1, it is necessary for the STA 1 to keep on storing specified CSI in a locked CSI field until measurement is finished, without deleting the specified CSI. Thus, it is necessary for the STA 1 to secure a memory capacity used for storing at least two pieces of CSI.

[Link Scanning Phase P106']

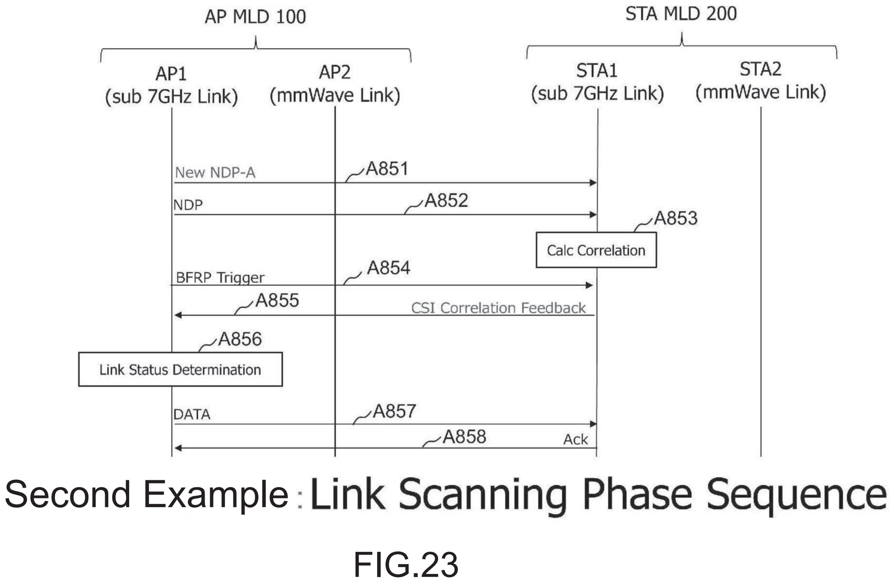

Fig. 23 illustrates an example of a sequence of the link scanning phase P106' in the second example. Here, as in the case of the normal sounding phase P103', the AP 1 transmits a new NDP-A frame and an NDP (A851, A852), causes the STA 1 to measure CSI, and causes the STA 1 to calculate a correlation value (A853). The NDP transmitted in Step A852 corresponds to a first packet used for CSI measurement. The new NDP-A frame transmitted in Step A851 includes first instruction information used to give instructions to measure CSI using a sub 7 GHz link and to calculate a correlation value. The AP 1 transmits a BFRP Trigger frame to the STA 1 (A854) to cause the STA 1 to transmit a CSI Correlation Feedback frame (A855). The CSI Correlation Feedback frame includes at least two CSI Correlation Feedback Elements, and one of the elements includes a correlation value of a correlation with CSI measured before blocking occurs and specified by a Locked CSI ID felid, and another of the elements includes a correlation value of a correlation with most recently measured CSI. On the basis of the acquired correlation values, the AP 1 determines a state of an mmWave link such as whether blocking has been overcome (A856). Processing of this determination is similar to the processes of Steps A513 to A519 in Fig. 15. After the determination, data transmission is performed between the AP 1 and the STA 1 (A857, A858). As described in the first example, the STA 1 may transmit a CSI Correlation Feedback frame in Step A855 only when one of correlation values is greater than or equal to a correlation threshold. In this example, the AP 1 causes the STA 1 to measure CSI and calculate a correlation value, but an example in which the AP 1 causes the STA 1 to only measure CSI and the AP 1 calculates a correlation value may also be adopted.

(Third Example)

The third example is an example when, during blocking of an mmWave link, the STA 1 measures CSI using a preamble attached to a data frame from the AP 1, and calculates a correlation value.

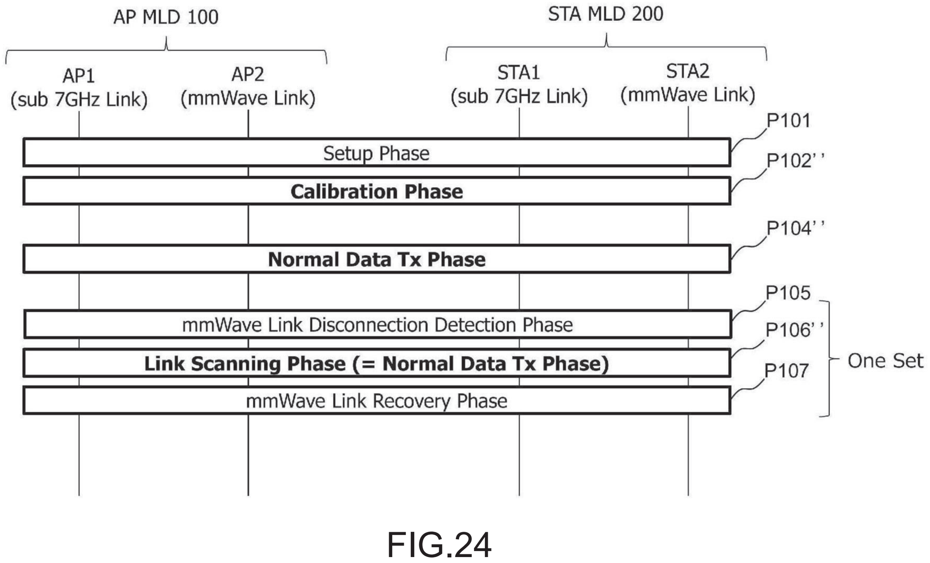

Fig. 24 is a diagram of a sequence of an overall operation according to a third example. A calibration phase P102'', a normal data Tx phase P104", and a link scanning phase P106'' that are different from those of the second example, are described in this example. The phases P101, P105, and P107 are similar to the second example. Thus, descriptions thereof are omitted.

[Calibration Phase P102'']

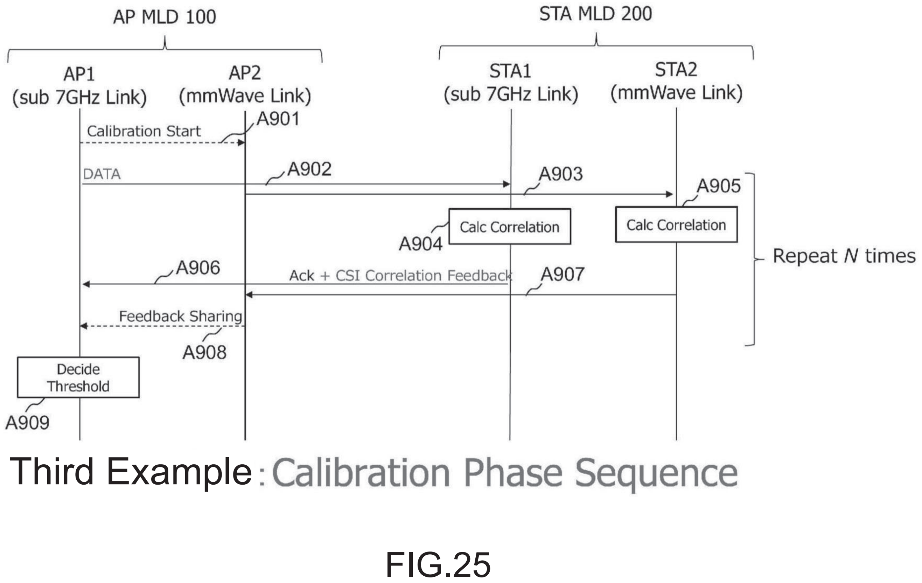

Fig. 25 illustrates an example of a sequence of the calibration phase P102'' in the third example. In the sequence illustrated in Fig. 25, CSI is measured multiple times using each of a sub 7 GHz link and an mmWave link, where the measurements are performed at the same time, and a correlation threshold used to detect the presence or absence of an obstacle is determined, as in the third example.

This example is different from the second example in that the AP 1 and the AP 2 use data frames instead of new NDP-A frames and NDPs to respectively cause the STA 1 and the STA 2 to each perform at least one of CSI measurement or calculation of a correlation value (A902, A903, A904, A905). The AP 1 and the AP 2 use long training fields (LTFs) included in preambles situated at the beginning of the data frames to respectively cause the STA 1 and the STA 2 to each perform CSI measurement. Compared with the second example, fewer frames are transmitted and received, as well as the AP 1 can cause the STA 1 to perform CSI measurement simultaneously with data transmission to the STA 1, and the AP 2 can cause the STA 2 to perform CSI measurement simultaneously with data transmission to the STA 2. This results in a reduced overhead. The processes of Steps A906 and A907 are essentially similar to the processes of Steps A710 and A711 in the second example. However, in the third example, each of the STA 1 and the STA 2 also transmits an acknowledgment (ack) corresponding to a data frame, in addition to a CSI Correlation Feedback frame that includes a CSI feedback element (refer to Fig. 21) that stores therein a calculated correlation value. The processes of Steps A901, A908, and A909 are similar to the processes of Steps A701, A712, and A713 in the second example.

Here, when the AP 1 performs a precoding process such as beamforming upon data transmission in Step A902 and when the AP 2 performs the precoding process upon data transmission in Step A903, a result of CSI measurement performed by each of the STA 1 and the STA 2 exhibits a value in consideration of precoding. Thus, the measured CSI is different from actual CSI. Therefore, there is a need to use the same precoding matrix at all times upon calculating a correlation for each of a sub 7 GHz link and an mmWave link. When a precoding process such as beamforming is performed, there is a good possibility that the accuracy in detecting, in the link scanning phase, whether there is blocking will be improved for each of the sub 7 GHz link and the mmWave link if beams that are strong with respect to a line-of-sight (LOS) component are formed.

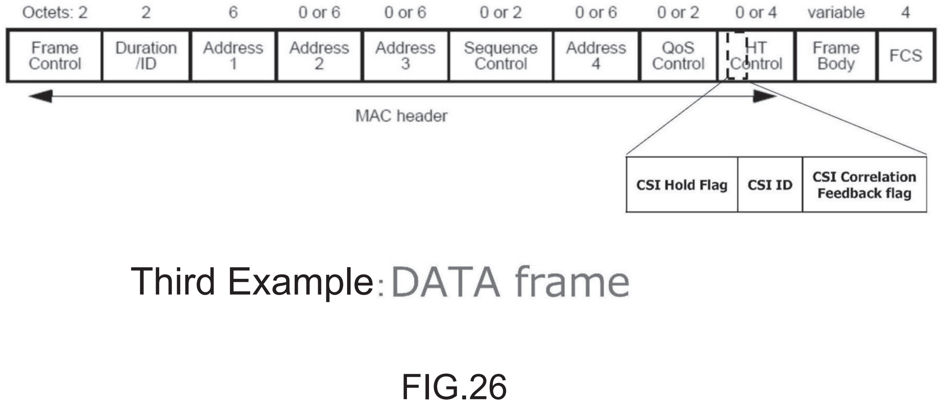

A control field of a data frame transmitted in each of Steps A902 and A903 includes a plurality of pieces of information necessary to calculate a correlation value for CSI. An example of a configuration of a data frame is described with reference to Fig. 26.

Fig. 26 illustrates an example of a configuration of a data frame in the third example. Here, a portion of an HT control field of a typical data frame of IEEE802.11 includes the following information. Note that the configuration of the data frame is not limited to the configuration illustrated in Fig. 26, and the data frame may include at least a portion of the following information.

CSI Hold flag: Flag information indicating, on the basis of the data frame, whether measured CSI is to be stored in the STA.

CSI ID: Identification information (ID) regarding CSI stored when the flag information indicates "true" (to be stored).

CSI Correlation Feedback flag: Flag information indicating whether to cause the STA to feed back a result of calculating a correlation value for CSI. When, for example, a correlation value is calculated by an STA every time without an AP specifying the flag information, and the calculated correlation value is less than a certain threshold (that is different from a correlation threshold), the AP may give the STA instructions to autonomously feed back the correlation value. A field that stores therein flag information indicating whether there is such an instruction may provided separately. A field that stores therein flag information indicating whether a CSI measurement result is to be fed back, may further be added.

[Normal Data Tx Phase P104'']

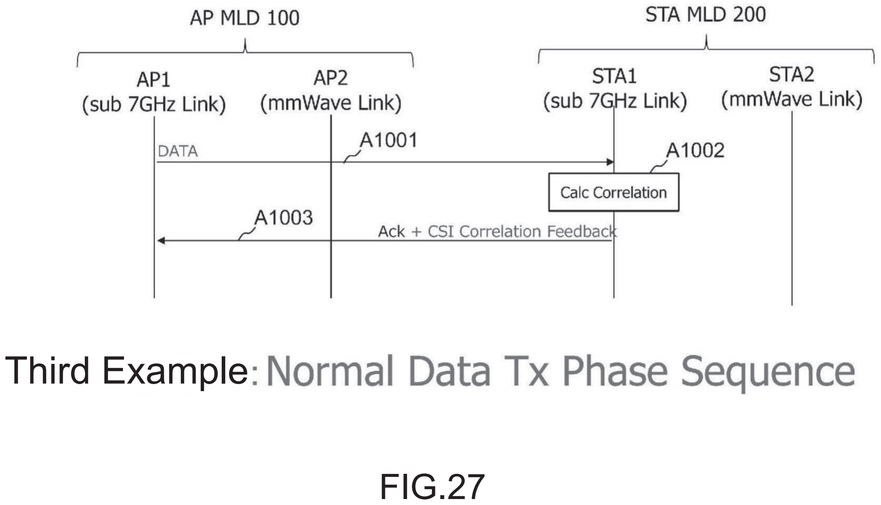

Fig. 27 illustrates an example of a sequence of the normal data Tx phase P104'' in the third example. As in the case of the calibration phase P102'', the AP 1 transmits a data frame to the STA 1 (A1001), and, according to instructions given by the AP 1, the STA 1 measures CSI, stores the measured CSI, and calculates a correlation value (A1002). The STA 1 transmits an ack to the AP 1, and transmits, to the AP 1, a CSI Correlation Feedback frame that includes a CSI Feedback Element (refer to Fig. 21) that stores therein the calculated correlation value (A1003). The data frame transmitted in Step A1001 of the normal data Tx phase P104'' corresponds to a second frame that includes a preamble used for CSI measurement, and a control field that includes second instruction information used to give instructions to measure CSI for a sub 7 GHz link and store the CSI. A data frame transmitted in Step A1001 of the link scanning phase P106'' corresponds to a first frame that includes a preamble used for CSI measurement, and a control field that includes first instruction information used to give instructions to measure CSI for a sub 7 GHz link and calculate a correlation value.

[Link Scanning Phase P106'']

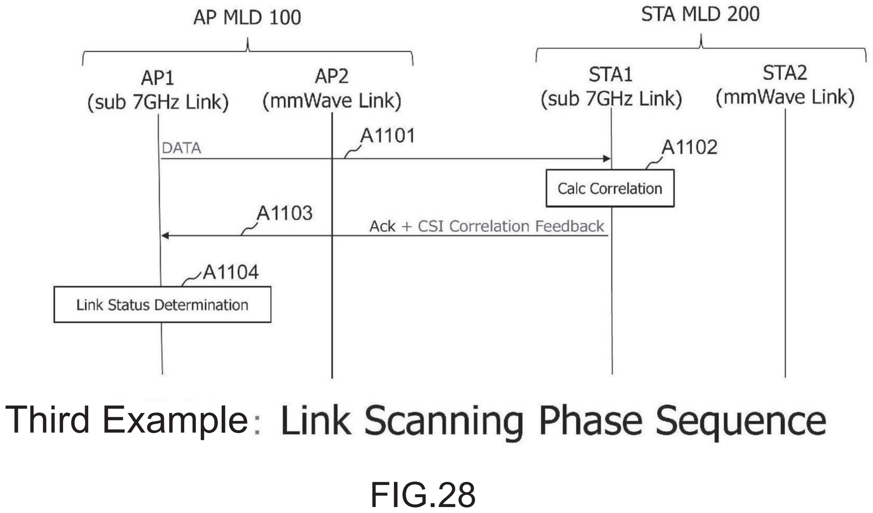

Fig. 28 illustrates an example of a sequence of the link scanning phase P106'' in the third example. The AP 1 transmits a data frame to the STA 1 (A1101), and according to instructions given by the AP 1, the STA 1 measures CSI and calculates a correlation value (A1102). The STA 1 transmits an ack to the AP 1, and transmits, to the AP 1, a CSI Correlation Feedback frame that includes a CSI feedback element that stores therein, for example, the calculated correlation value (A1103). The STA 1 may transmit a CSI Correlation Feedback frame only when a correlation value is greater than or equal to a correlation threshold. The data frame transmitted in Step A1001 corresponds to the first frame including a preamble used for CSI measurement, and a control field that includes first instruction information used to give instructions to measure CSI for a sub 7 GHz link and calculate a correlation value. The AP 1 determines whether blocking has been overcome, on the basis of the acquired correlation value (A1104). Details of this processing is similar to those in each of the first and second examples. In this example, the AP 1 causes the STA 1 to measure CSI and calculate a correlation value, but an example in which the AP 1 causes the STA 1 to only measure CSI and the AP 1 calculates a correlation value may also be adopted.

The first to third examples have been described above. Note that, for example, the AP 1 may determine which of the first to third examples is to be adopted, on the basis of capability information regarding capability of the AP MLD 100 and capability information regarding the STA MLD 200. Further, for example, the AP 1 may determine or switch the example to be adopted, on the basis of burdens currently imposed on the STA MLD 200.

(Effects Provided by Present Embodiment)

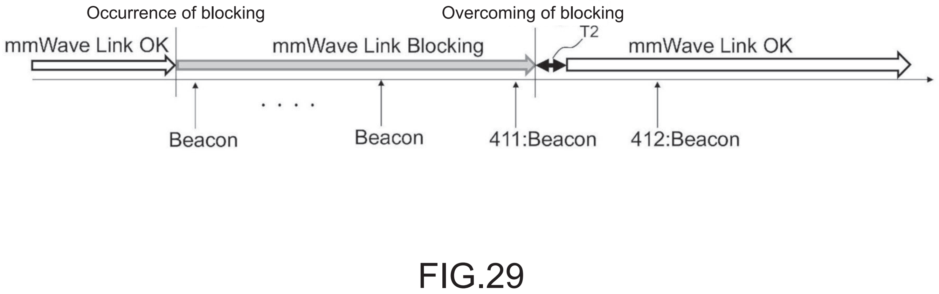

Fig. 29 is a diagram used to describe effects provided by the present embodiment. According to the present embodiment, after blocking occurs, the AP 1 monitors a channel state at small intervals for a sub 7 GHz link to check whether there is the blocking. This makes it possible to detect overcoming of blocking of an mmWave link (re-establishment of a link) without waiting for an interval of time from a beacon signal 411 being transmitted using an mmWave link (an illustrated 60 GHz link) immediately before blocking occurs to a beacon signal 412 being transmitted after blocking is overcome. In other words, overcoming of blocking can be detected in a short period of time T2 after the overcoming of blocking.

Further, when an mmWave link has been re-established (when blocking has been overcome), a previous BF parameter (a parameter used for beamforming) can be used with no change if there is no change or a small change in channel state from a channel state before occurrence of blocking. Thus, a period of time for which BF training is performed again can be omitted. As a result, the mmWave link can be re-established quickly, and effects of, for example, improving system throughput and reducing transmission delay can be provided.

Further, during blocking of an mmWave link (while blocking has not been overcome), the AP 2 and the STA 2 can stop an operation portion of an mmWave link, and thus effects of lower-power consumption can also be expected.

In particular, in the first example, CSI measurement by the AP 1 makes it possible to obtain the effects described above without increasing processing burdens imposed on the STA 1.

In the second example, CSI measurement by the STA 1 makes it possible to reduce information volume fed back by the STA 1 and expect a reduction in system overhead.

In the third example, CSI measurement by the STA 1 using a data frame makes it possible to expect a further reduction in system overhead. Further, the accuracy in detecting blocking in an LOS can be increased in some cases.

<Example of Configuration of Computer>

The series of processes described above can be performed using hardware or software. When the series of processes is performed using software, a program included in the software is installed from a program recording medium on, for example, a computer incorporated into dedicated hardware or a general-purpose personal computer.

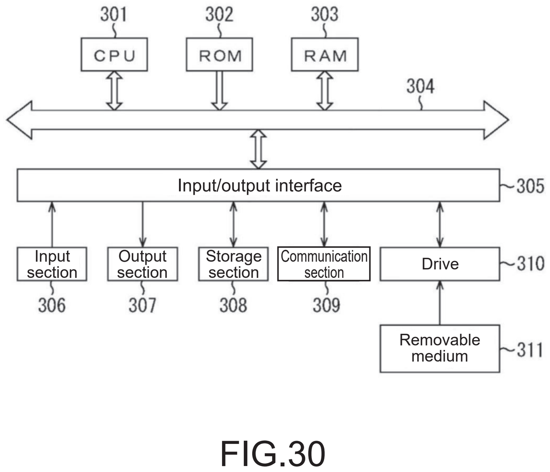

Fig. 30 is a block diagram of an example of a configuration of hardware of a computer that performs the series of processes described above using a program.

A central processing unit (CPU) 301, a read only memory (ROM) 302, and a random access memory (RAM) 303 are connected to each other through a bus 304.

Further, an input/output interface 305 is connected to the bus 304. An input section 306 that includes, for example, a keyboard and a mouse, and an output section 307 that includes, for example, a display and a speaker are connected to the input/output interface 305. Further, a storage section 308 that includes, for example, a hard disk and a nonvolatile memory, a communication section 309 that includes, for example, a network interface, and a drive 310 that drives a removable medium 311 are connected to the input/output interface 305.

In a computer having the configuration described above, the series of processes described above is performed by the CPU 301 loading, for example, a program stored in the storage section 308 into the RAM 303 and executing the program via the input/output interface 305 and the bus 304.

For example, the program executed by the CPU 301 is provided by being recorded in the removable medium 311 or provided via a wired or wireless transmission medium such as a local area network, the Internet, or digital broadcasting, and the provided program is installed on the storage section 308.

Note that the program executed by the computer may be a program in which processes are chronologically performed in the order of the description herein, or may be a program in which processes are performed in parallel or a process is performed at a necessary timing such as a timing of calling.

<Application Examples>

The present technology can be applied to various products. For example, the communication apparatus 100 illustrated in Fig. 3 and the communication apparatus 200 illustrated in Fig. 4 may each be implemented as a mobile terminal such as a smartphone, a tablet personal computer (PC), a laptop, a portable game terminal, or a digital camera; a fixed terminal such as a television receiver, a printer, a digital scanner, or a network storage; or an in-vehicle terminal such as a car navigation apparatus. Furthermore, the communication apparatus 100 and the communication apparatus 200 may each be implemented as a machine-to-machine communication (M2M) terminal such as a smart meter, a vending machine, a remote monitoring apparatus, or a point-of-sale (POS) terminal. Moreover, each of the communication apparatus 100 and the communication apparatus 200 may be a wireless communication module (such as an integrated circuit module formed using one die) included in a corresponding one of these terminals.

On the other hand, for example, the communication apparatus 100 and the communication apparatus 200 may each be implemented as a wireless LAN AP (a wireless base station) that includes or does not include a router function. Further, the communication apparatus 100 and the communication apparatus 200 may each be implemented as a mobile wireless LAN router. Furthermore, each of the communication apparatus 100 and the communication apparatus 200 may be a wireless communication module (such as an integrated circuit module formed using one die) included in corresponding one of these apparatuses.

<Example of Configuration of Smartphone>

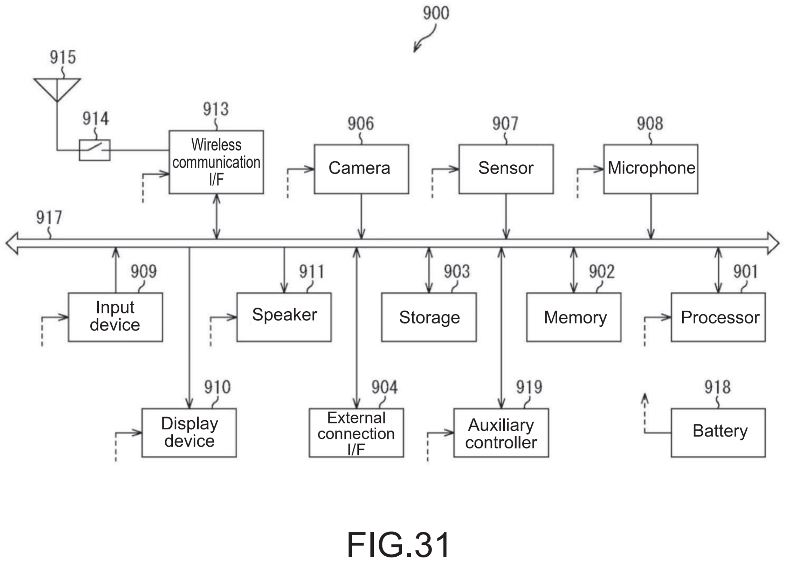

Fig. 31 is a block diagram of an example of a schematic configuration of a smartphone to which the present technology is applied.

A smartphone 900 includes a processor 901, a memory 902, a storage 903, an external connection interface 904, a camera 906, a sensor 907, a microphone 908, an input device 909, and a display device 910. Furthermore, the smartphone 900 includes a speaker 911, a wireless communication interface 913, an antenna switch 914, an antenna 915, a bus 917, a battery 918, and an auxiliary controller 919.

The processor 901 may be, for example, a CPU or a system on chip (SoC), and restricts functions of an application layer and other layers of the smartphone 900.

The memory 902 includes a RAM and a ROM, and stores therein a program that is executed by the processor 901, and data.

The storage 903 may include a storage medium such as a semiconductor memory or a hard disk.

The external connection interface 904 is an interface used to connect an external device such as a memory card or a Universal Serial Bus (USB) device to the smartphone 900.

The camera 906 includes an imaging element such as a charge-coupled device (CCD) or a complementary metal-oxide semiconductor (CMOS), and generates a captured image.

The sensor 907 includes a sensor group such as a positioning sensor, a gyroscope, a geomagnetic sensor, and an acceleration sensor.

The microphone 908 converts, into an audio signal, sound input to the smartphone 900.

The input device 909 includes, for example, a touch sensor that detects touch on a screen of the display device 910, a keypad, a keyboard, a button, or a switch, and receives an operation performed by a user or information input by the user.

The display device 910 includes a screen such as a liquid crystal display (LCD) or an organic light-emitting diode (OLED) display, and converts, into sound, the audio signal output by the smartphone 900.

The wireless communication interface 913 supports at least one of wireless LAN standards such as IEEE 802.11a, 11b, 11g, 11ac, 11ad, 11ax, 11ay, and 11be, and performs wireless communication.

The wireless communication interface 913 communicates with other apparatuses through a wireless LAN AP in an infrastructure mode. Further, the wireless communication interface 913 directly communicates with other apparatuses in an ad hoc mode or a direct communication mode such as Wi-Fi Direct.

Note that, in Wi-Fi Direct, one of two terminals operates as an AP but communication is directly performed between the terminals, which is different from the ad hoc mode.

Typically, the wireless communication interface 913 includes, for example, a baseband processor, a radio frequency (RF) circuit, and a power amplifier. The wireless communication interface 913 may be a one-chip module in which a memory that stores therein a communication control program, a processor that executes the program, and related circuits are integrated.

In addition to the wireless LAN scheme, the wireless communication interface 913 may support other types of wireless communication schemes such as a near field communication scheme, a proximity wireless communication scheme, and a cellular communication scheme.

The antenna switch 914 switches a connection destination of the antenna 915 between circuits of a plurality of circuits (such as circuits for different wireless communication schemes) included in the wireless communication interface 913.

The antenna 915 includes at least one antenna element (such as a plurality of the antenna elements included in a multiple input multiple output (MIMO) antenna), and is used for transmission and reception of a radio signal through the wireless communication interface 913.

Note that the smartphone 900 is not limited to the example illustrated in Fig. 31, and may include a plurality of antennas (such as an antenna for wireless LAN and an antenna of a proximity wireless communication scheme). In this case, the antenna switch 914 may be omitted from the configuration of the smartphone 900.

The processor 901, the memory 902, the storage 903, the external connection interface 904, the camera 906, the sensor 907, the microphone 908, the input device 909, the display device 910, the speaker 911, the wireless communication interface 913, and the auxiliary controller 919 are connected to each other through the bus 917.

The battery 918 supplies power to each block of the smartphone 900 illustrated in Fig. 31 through a power supply line partially indicated using a broken line in the figure. The auxiliary controller 919 operates a minimum necessary function of the smartphone 900 in, for example, a sleep mode.

In the smartphone 900 illustrated in Fig. 31, for example, the AP 1, AP 2, the communication controller 111, and the controller 130 illustrated in Fig. 3, as well as the STA 1, STA 2, communication controller 211, and controller 230 illustrated in Fig. 4 may be implemented by the wireless communication interface 913. Further, at least a portion of these functions may be implemented by the processor 901 or the auxiliary controller 919.

Note that the smartphone 900 may operate as a wireless AP (a software AP) when the processor 901 executes an AP function at an application level. Further, the wireless communication interface 913 may include the wireless AP function.

Furthermore, the smartphone 900 may include a biometric authentication section (fingerprint authentication, palm-shape authentication, voice authentication, blood vessel authentication, face authentication, iris authentication, and retina authentication). In this case, the wireless communication interface 913 by which the AP 1, AP 2, the communication controller 111, and the controller 130 illustrated in Fig. 3, as well as the STA 1, STA 2, communication controller 211, and controller 230 illustrated in Fig. 4 are implemented is configured to receive power supply from the same battery 918 as at least one of the display device 910, the speaker 911, or the biometric authentication section.

Moreover, in the smartphone 900, information is displayed using at least one of the display device 910 or the speaker 911 on the basis of communication performed with an external apparatus using the wireless communication interface 913. In this case, information related to the present technology may be output as the information from at least one of the display device 910 or the speaker 911.

<Example of Configuration of In-vehicle Apparatus>

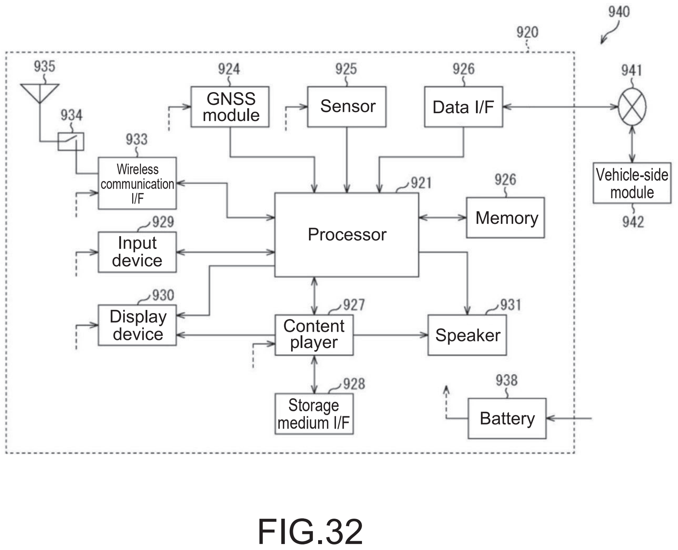

Fig. 32 is a block diagram of an example of a schematic configuration of an in-vehicle apparatus 920 to which the present technology is applied.

The in-vehicle apparatus 920 includes a processor 921, a memory 922, a global navigation satellite system (GNSS) module 924, a sensor 925, a data interface 926, a content player 927, and a storage medium interface 928. Further, the in-vehicle apparatus 920 includes an input device 929, a display device 930, a speaker 931, a wireless communication interface 933, an antenna switch 934, an antenna 935, and a battery 938.

The processor 921 may be, for example, a CPU or an SoC, and controls a navigation function and other functions of the in-vehicle apparatus 920. Further, the processor 921 can also control a drive system of a vehicle, such as a brake, an accelerator, or a steering, on the basis of information obtained through communication based on the present technology.

The memory 922 includes a RAM and a ROM, and stores therein a program that is executed by the processor 921, and data.

The GNSS module 924 measures a location (for example, latitude, longitude, and altitude) of the in-vehicle apparatus 920 using a GNSS signal received from a GNSS satellite.

The sensor 925 includes a sensor group such as a gyroscope, a geomagnetic sensor, and an atmospheric-pressure sensor.

The data interface 926 is connected to an in-vehicle network 941 through, for example, a terminal (not illustrated), and acquires data, such as in-vehicle data, that is generated on the vehicle side.

The content player 927 plays back content stored in a storage medium (such as a CD or a DVD) inserted into the storage medium interface 928.

The input device 929 includes, for example, a touch sensor that detects touch on a screen of the display device 930, a button, or a switch, and receives an operation performed by the user or information input by the user.

The display device 930 includes a screen such as an LCD or an OLED display, and displays thereon an image of a navigation function or of content to be played back.

The speaker 931 outputs sound of the navigation function or content to be played back.

Note that, in the in-vehicle apparatus 920, the navigation function and the function of the content player 927 are optional. The navigation function and the content player 927 may be excluded from the configuration of the in-vehicle apparatus 920.

The wireless communication interface 933 supports at least one of the wireless LAN standards such as IEEE 802.11a, 11b, 11g, 11n, 11ac, 11ad, 11ax, 11ay, and 11be, and performs wireless communication. The wireless communication interface 933 communicates with other apparatuses through a wireless LAN AP in the infrastructure mode. Further, the wireless communication interface 933 directly communicates with other apparatuses in the ad hoc mode or the direct communication mode such as Wi-Fi Direct.

Typically, the wireless communication interface 933 includes, for example, a baseband processor, an RF circuit, and a power amplifier. The wireless communication interface 933 may be a one-chip module in which a memory that stores therein a communication control program, and a processor that executes the program or related circuits are integrated. In addition to the wireless LAN scheme, the wireless communication interface 933 may support other types of wireless communication schemes such as a near field communication scheme, a proximity wireless communication scheme, and a cellular communication scheme.

The antenna switch 934 switches a connection destination of the antenna 935 between circuits of a plurality of circuits included in the wireless communication interface 933.

The antenna 935 includes at least one antenna element, and is used for transmission and reception of a radio signal through the wireless communication interface 933.

Note that the in-vehicle apparatus 920 is not limited to the example in Fig. 32, and may include a plurality of the antennas 935. In this case, the antenna switch 934 may be omitted from the configuration of the in-vehicle apparatus 920.

In the in-vehicle apparatus 920 illustrated in Fig. 32, for example, the AP 1, AP 2, the communication controller 111, and the controller 130 illustrated in Fig. 3, as well as the STA 1, STA 2, communication controller 211, and controller 230 illustrated in Fig. 4 may be implemented by the wireless communication interface 933 through a power supply line partially indicated using a broken line in the figure. Further, at least a portion of these functions may be implemented by the processor 921.

Further, the wireless communication interface 933 may operate as each of the communication apparatus 100 and communication apparatus 200 described above and provide wireless connection to a terminal of the user in the vehicle.

Furthermore, the present technology may be implemented as an in-vehicle system (or vehicle) 940 that includes at least one block of the in-vehicle apparatus 920 described above, the in-vehicle network 941, and a vehicle-side module 942. The vehicle-side module 942 generates vehicle-side data such as a vehicle speed, a rotation speed of an engine, or failure information, and outputs the generated data to the in-vehicle network 941.

<Example of Configuration of Wireless AP>

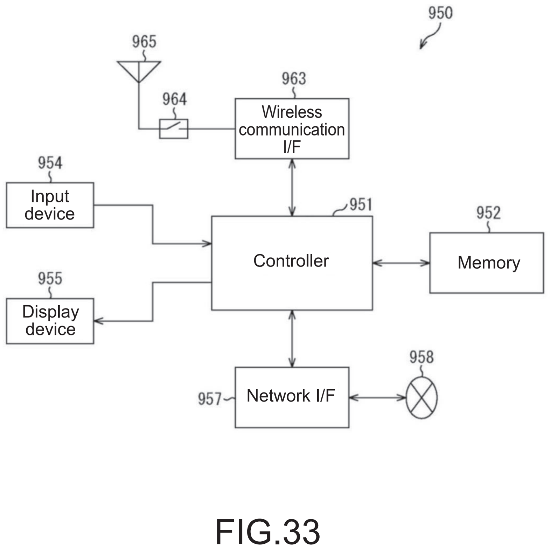

Fig. 33 is a block diagram of an example of a schematic configuration of a wireless AP 950 to which the present technology is applied.

The wireless AP 950 includes a controller 951, a memory 952, an input device 954, a display device 955, a network interface 957, a wireless communication interface 963, an antenna switch 964, and an antenna 965.

The controller 951 may be, for example, a CPU or a digital signal processor (DSP), and operates various functions (such as access restriction, routing, encryption, firewall, and log management) of the Internet protocol (IP) layer and higher layers of the wireless AP 950.

The memory 952 includes a RAM and a ROM, and stores therein a program that is executed by the controller 951, and various control information (such as a terminal list, a routing table, an encryption key, a security setting, and a log).

The input device 954 includes, for example, a button and a switch, and receives an operation performed by the user.

The display device 955 includes, for example, an LED lamp, and displays thereon an operation status of the wireless AP 950.

The network interface 957 is a wired communication interface used to connect the wireless AP 950 to a wired communication network 958. The network interface 957 may include a plurality of connection terminals. The wired communication network 958 may be a LAN such as Ethernet (registered trademark), or may be a wide area network (WAN).

The wireless communication interface 963 supports one or more of the wireless LAN standards such as IEEE 802.11a, 11b, 11g, 11n, 11ac, 11ad, 11ax, 11ay, and 11be, and provides wireless connection as an AP for a nearby terminal.

Typically, the wireless communication interface 963 includes, for example, a baseband processor, a RF circuit, and a power amplifier.

The wireless communication interface 963 may be a one-chip module in which a memory that stores therein a communication control program, and a processor that executes the program or related circuits are integrated.

The antenna switch 964 switches a connection destination of the antenna 965 between circuits of a plurality of circuits included in the wireless communication interface 963, and the antenna 965 includes at least one antenna element, and is used for transmission and reception of a radio signal through the wireless communication interface 963.

In the wireless AP 950 illustrated in Fig. 33, for example, the AP 1, AP 2, the communication controller 111, and the controller 130 illustrated in Fig. 3, as well as the STA 1, STA 2, communication controller 211, and controller 230 illustrated in Fig. 4 may also be implemented by the wireless communication interface 963. Further, at least a portion of these functions may be implemented by the controller 951.

Note that the embodiments described above are examples for implementing the present technology, and there is a correspondence relationship between the matter in the embodiments and the claimed invention-specifying matter. Likewise, there is a correspondence relationship between the claimed invention-specifying matter and the matter in the embodiments of the present technology when those are denoted by the same name. However, the present technology is not limited to the embodiments, and can be implemented by various modifications being made to the embodiments without departing from the scope of the present technology.

Further, the processing procedures described in the embodiments described above may be considered a method including a series of the procedures, or may be considered a program used to cause this computer to execute the series of the procedures, and a recording medium that stores therein the program.

For example, a compact disc (CD), a MiniDisc (MD), a digital versatile disc (DVD), a memory card, or a Blu-ray (registered trademark) Disc can be used as this recording medium.

Note that the system as used herein refers to a collection of a plurality of components (such as apparatuses and modules (parts)) and it does not matter whether all of the components are in a single housing. Thus, a plurality of apparatuses accommodated in separate housings and connected to one another via a network, and a single apparatus in which a plurality of modules is accommodated in a single housing are both systems.

Further, the effects described herein are not limitative but are merely illustrative, and other effects may be provided.

The embodiments of the present technology are not limited to the examples described above, and various modifications may be made thereto without departing from the scope of the present technology.

For example, the present technology may have a configuration of cloud computing in which a single function is shared to be cooperatively processed by a plurality of apparatuses via a network.

Further, the respective steps described using the flowcharts described above may be performed by a single apparatus, or may be shared to be performed by a plurality of apparatuses.

Furthermore, when a single step includes a plurality of processes, the plurality of processes included in the single step may be performed by a single apparatus, or may be shared to be performed by a plurality of apparatuses.

The present embodiment may also have the following configurations.

(1) A communication apparatus, including:

a first communication section that performs a first wireless communication using a first link; and
a second communication section that performs a second wireless communication using a second link with a frequency higher than a frequency of the first link, in which
the first communication section

acquires channel state information regarding the first link on a basis of a radio signal of the first link, and detects presence of an obstacle that blocks the second wireless communication, on a basis of the channel state information regarding the first link.

(2) The communication apparatus according to (1), in which
the first communication section

acquires a correlation value of a correlation between first channel-state information and second channel-state information, the first channel-state information being the channel state information regarding the first link, which is acquired at a first point in time, the second channel-state information being the channel state information regarding the first link, which is acquired at a second point in time that is earlier than the first point in time, and detects the presence of the obstacle on a basis of the correlation value.

(3) The communication apparatus according to (2), in which

the second communication section performs the second wireless communication on a basis of a transmission parameter,
the second communication section retains the transmission parameter when a reduction in a quality of the second wireless communication is detected,
the first point in time is a point in time after the reduction in the quality of the second wireless communication is detected,
the second point in time is a point in time before the reduction in the quality of the second wireless communication is detected,
the first communication section acquires the correlation value when the reduction in the quality of the second wireless communication is detected, and
when absence of the obstacle is detected on the basis of the correlation value, the second communication section performs the second wireless communication reusing the retained transmission parameter.

(4) The communication apparatus according to (3), in which

using the first link, the first communication section performs the first wireless communication with a third communication section of another communication apparatus that is a communication target,
using the second link, the second communication section performs the first wireless communication with a fourth communication section of the other communication apparatus, and
when the absence of the obstacle is detected, the first communication section transmits, to the third communication section, information indicating that a transmission parameter used by the fourth communication section when the reduction in the quality of the second wireless communication is detected, is reusable, the third communication section being capable of exchanging information with the fourth communication section.

(5) The communication apparatus according to (3) or (4), in which

the first communication section acquires a correlation value of a correlation between the first channel-state information and third channel-state information that is acquired at a third point in time after the reduction in the quality of the second wireless communication is detected, the third point in time being earlier than the first point in time,
the second communication section redetermines a transmission parameter when the absence of the obstacle is detected on a basis of the correlation value of the correlation between the first channel-state information and the third channel-state information, and
the second communication section performs the second wireless communication using the redetermined transmission parameter.

(6) The communication apparatus according to any one of (3) to (5), in which
the transmission parameter is a parameter used to perform beamforming using the second link.
(7) The communication apparatus according to any one of (2) to (6), in which
the first communication section detects the presence of the obstacle by comparing the correlation value to a threshold.
(8) The communication apparatus according to (7), in which

the first communication section acquires the pieces of channel state information regarding the first link at a plurality of points in time,
the second communication section acquires pieces of channel state information regarding the second link at the plurality of points in time, and
the first communication section determines the threshold on a basis of the pieces of acquired channel state information regarding the first link and the pieces of acquired channel state information regarding the second link.

(9) The communication apparatus according to any one of (2) to (8), in which

using the first link, the first communication section performs the first wireless communication with a third communication section of another communication apparatus that is a communication target,
on a basis of information regarding the communication apparatus and information regarding the other communication apparatus, the first communication section determines by which of the first communication section and the third communication section processing of measuring the channel state information regarding the first link is to be performed,
when the processing is determined to be performed by the communication apparatus, the first communication section measures the channel state information regarding the first link, and
when the processing is determined to be performed by the third communication section of the other communication apparatus, the first communication section transmits, to the third communication section of the other communication apparatus, instruction information used to give instructions to measure the channel state information regarding the first link, and acquires the channel state information regarding the first link from the third communication section.

(10) The communication apparatus according to (9), in which

the information regarding the communication apparatus and the information regarding the other communication apparatus each include at least one of information regarding a capability or incapability to measure the channel state information regarding the first link, information regarding a capability or incapability to calculate the correlation value, or information regarding a capacity available to store the channel state information regarding the first link.

(11) The communication apparatus according to (9) or (10), in which

the processing further includes calculating the correlation value, and

when the other communication apparatus performs the processing, the first communication section transmits, to the third communication section of the other communication apparatus, instruction information used to give instructions to store the channel state information regarding the first link for the calculation of the correlation value, the channel state information regarding the first link being measured by the third communication section of the other communication apparatus before a reduction in a quality of the second wireless communication is detected.

(12) The communication apparatus according to (11), in which

the first communication section transmits, to the third communication section of the other communication apparatus, information indicating a threshold used to determine whether there is the obstacle by comparing the threshold to the correlation value, and
when the correlation value is greater than or equal to the threshold, the first communication section receives information indicating the correlation value from the third communication section.

(13) A communication apparatus, including:

a first communication section that performs a first wireless communication using a first link; and
a second communication section that performs a second wireless communication using a second link with a frequency higher than a frequency of the first link, in which
the first communication section measures channel state information regarding the first link on a basis of a radio signal of the first link, and
when a reduction in a quality of the second wireless communication is detected in the second link,
the first communication section

calculates a correlation value of a correlation between first channel-state information and second channel-state information, the first channel-state information being the channel state information regarding the first link, which is measured before the reduction in the quality of the second wireless communication is detected, the second channel-state information being the channel state information regarding the first link, which is measured after the reduction in the quality of the second wireless communication is detected, and transmits information indicating the correlation value.

(14) The communication apparatus according to (13), in which
the first communication section

receives first instruction information used to give instructions to measure the channel state information regarding the first link and calculate the correlation value,
measures the second channel-state information regarding the first link on a basis of the first instruction information, and
calculates the correlation value on a basis of the measured second channel-state information and the first channel-state information measured before the first instruction information is received.

(15) The communication apparatus according to (14), in which

after receiving the first instruction information, the first communication section receives a first packet used to measure the channel state information, and
the first communication section measures the second channel-state information regarding the first link on a basis of the first packet.

(16) The communication apparatus according to (15), in which
the first communication section

receives second instruction information used to give instructions to measure and store the first channel-state information regarding the first link,
further receives a second packet used to measure the first channel-state information regarding the first link,
measures the first channel-state information regarding the first link on a basis of the second packet according to the second instruction information, and
stores therein the measured first channel-state information.

(17) The communication apparatus according to any one of (14) to (16), in which
the first communication section

receives a first frame that includes

a preamble used to measure the second channel-state information regarding the first link, and
a control field that stores therein the first instruction information, and

measures the second channel-state information regarding the first link on a basis of the preamble according to the first instruction information included in the control field included in the first frame.

(18) The communication apparatus according to (17), in which
the first communication section

receives a second frame that includes

a preamble used to measure the first channel-state information regarding the first link, and
a control field that stores therein second instruction information used to give instructions to measure and store the first channel-state information regarding the first link,

measures the first channel-state information regarding the first link on a basis of the preamble according to the second instruction information included in the control field included in the second frame, and
stores therein the measured first channel-state information regarding the first link.

(19) The communication apparatus according to any one of (13) to (18), in which

the second communication section performs the second wireless communication on a basis of a transmission parameter,
the second communication section retains the transmission parameter when the reduction in the quality of the second wireless communication is detected,
after transmitting the information indicating the correlation value, the first communication section receives information regarding whether the transmission parameter is reusable, and
the second communication section performs the second wireless communication reusing the retained transmission parameter on a basis of the received information.

(20) A communication method, including:

performing a first wireless communication using a first link;
performing a second wireless communication using a second link with a frequency higher than a frequency of the first link;
acquiring channel state information regarding the first link on a basis of a radio signal of the first link; and
detecting presence of an obstacle that blocks the second wireless communication, on a basis of the channel state information regarding the first link.

(21) A communication method, including:

performing a first wireless communication using a first link;
performing a second wireless communication using a second link with a frequency higher than a frequency of the first link;
measuring channel state information regarding the first link on a basis of a radio signal of the first link;
when a reduction in a quality of the second wireless communication is detected in the second link, calculating a correlation value of a correlation between first channel-state information and second channel-state information, the first channel-state information being the channel state information regarding the first link, which is measured before the reduction in the quality of the second wireless communication is detected, the second channel-state information being the channel state information regarding the first link, which is measured after the reduction in the quality of the second wireless communication is detected; and

transmitting information indicating the correlation value.

Reference Signs List

| | |
|---|---|
| 100 | communication apparatus (AP MLD, AP apparatus) |
| 110 | wireless communication section |
| 111 | communication controller |
| 112 | communication storage section |
| 113 | shared data processing section |
| 121 | individual data processing section |
| 122 | signal processing section |
| 123 | wireless interface section |
| 124 | amplification section |
| 130 | controller |
| 140 | storage section |
| 150 | antenna |
| 160 | WAN communication section |
| 200 | communication apparatus (STA MLD, STA apparatus) |
| 210 | wireless communication section |
| 211 | communication controller |
| 212 | communication storage section |
| 213 | shared data processing section |
| 221 | individual data processing section |
| 222 | present processing section |
| 222 | signal processing section |
| 223 | wireless interface section |
| 224 | amplification section |
| 230 | controller |
| 240 | storage section |
| 250 | antenna |
| 304 | bus |
| 305 | input/output interface |
| 306 | input section |
| 307 | output section |
| 308 | storage section |
| 309 | communication section |
| 310 | drive |
| 311 | removable medium |
| 401 | beacon signal |
| 401 | beacon signal |
| 402 | BF training |
| 402 | BF training again |
| 403 | data transmission |
| 411 | beacon signal |
| 412 | beacon signal |
| 560 ms | average |
| 900 | smartphone |
| 901 | processor |
| 902 | memory |
| 903 | storage |
| 904 | external connection interface |
| 906 | camera |

| 907 | sensor |
| 908 | microphone |
| 909 | input device |
| 910 | display device |
| 911 | speaker |
| 913 | wireless communication interface |
| 914 | antenna switch |
| 915 | antenna |
| 917 | bus |
| 918 | battery |
| 919 | auxiliary controller |
| 920 | in-vehicle apparatus |
| 921 | processor |
| 922 | memory |
| 924 | GNSS module |
| 925 | sensor |
| 926 | data interface |
| 927 | content player |
| 928 | storage medium interface |
| 929 | input device |
| 930 | display device |
| 931 | speaker |
| 933 | wireless communication interface |
| 934 | antenna switch |
| 935 | antenna |
| 938 | battery |
| 940 | in-vehicle system (or vehicle) |
| 941 | in-vehicle network |
| 942 | vehicle-side module |
| 951 | controller |
| 952 | memory |
| 954 | input device |
| 955 | display device |
| 957 | network interface |
| 958 | wired communication network |
| 963 | wireless communication interface |
| 964 | antenna switch |
| 965 | antenna |
| 950 | wireless AP |

**Claims**

1. A communication apparatus, comprising:

   a first communication section that performs a first wireless communication using a first link; and
   a second communication section that performs a second wireless communication using a second link with a frequency higher than a frequency of the first link, wherein
   the first communication section

   acquires channel state information regarding the first link on a basis of a radio signal of the first link, and detects presence of an obstacle that blocks the second wireless communication, on a basis of the channel state information regarding the first link.

2. The communication apparatus according to claim 1, wherein
   the first communication section

   acquires a correlation value of a correlation between first channel-state information and second channel-state information, the first channel-state information being the channel state information regarding the first link, which is acquired at a first point in time, the second channel-state information being the channel state information regarding the first link, which is acquired at a second point in time that is earlier than the first point in time, and detects the presence of the obstacle on a basis of the correlation value.

3. The communication apparatus according to claim 2, wherein

the second communication section performs the second wireless communication on a basis of a transmission parameter,
the second communication section retains the transmission parameter when a reduction in a quality of the second wireless communication is detected,
the first point in time is a point in time after the reduction in the quality of the second wireless communication is detected,
the second point in time is a point in time before the reduction in the quality of the second wireless communication is detected,
the first communication section acquires the correlation value when the reduction in the quality of the second wireless communication is detected, and
when absence of the obstacle is detected on the basis of the correlation value, the second communication section performs the second wireless communication reusing the retained transmission parameter.

4. The communication apparatus according to claim 3, wherein

using the first link, the first communication section performs the first wireless communication with a third communication section of another communication apparatus that is a communication target,
using the second link, the second communication section performs the first wireless communication with a fourth communication section of the other communication apparatus, and
when the absence of the obstacle is detected, the first communication section transmits, to the third communication section, information indicating that a transmission parameter used by the fourth communication section when the reduction in the quality of the second wireless communication is detected, is reusable, the third communication section being capable of exchanging information with the fourth communication section.

5. The communication apparatus according to claim 3, wherein

the first communication section acquires a correlation value of a correlation between the first channel-state information and third channel-state information that is acquired at a third point in time after the reduction in the quality of the second wireless communication is detected, the third point in time being earlier than the first point in time,
the second communication section redetermines a transmission parameter when the absence of the obstacle is detected on a basis of the correlation value of the correlation between the first channel-state information and the third channel-state information, and
the second communication section performs the second wireless communication using the redetermined transmission parameter.

6. The communication apparatus according to claim 3, wherein
the transmission parameter is a parameter used to perform beamforming using the second link.

7. The communication apparatus according to claim 2, wherein
the first communication section detects the presence of the obstacle by comparing the correlation value to a threshold.

8. The communication apparatus according to claim 7, wherein

the first communication section acquires the pieces of channel state information regarding the first link at a plurality of points in time,
the second communication section acquires pieces of channel state information regarding the second link at the plurality of points in time, and
the first communication section determines the threshold on a basis of the pieces of acquired channel state information regarding the first link and the pieces of acquired channel state information regarding the second link.

9. The communication apparatus according to claim 2, wherein

using the first link, the first communication section performs the first wireless communication with a third communication section of another communication apparatus that is a communication target,

on a basis of information regarding the communication apparatus and information regarding the other communication apparatus, the first communication section determines by which of the first communication section and the third communication section processing of measuring the channel state information regarding the first link is to be performed,

when the processing is determined to be performed by the communication apparatus, the first communication section measures the channel state information regarding the first link, and

when the processing is determined to be performed by the third communication section of the other communication apparatus, the first communication section transmits, to the third communication section of the other communication apparatus, instruction information used to give instructions to measure the channel state information regarding the first link, and acquires the channel state information regarding the first link from the third communication section.

10. The communication apparatus according to claim 9, wherein

the information regarding the communication apparatus and the information regarding the other communication apparatus each include at least one of information regarding a capability or incapability to measure the channel state information regarding the first link, information regarding a capability or incapability to calculate the correlation value, or information regarding a capacity available to store the channel state information regarding the first link.

11. The communication apparatus according to claim 9, wherein

the processing further includes calculating the correlation value, and

when the other communication apparatus performs the processing, the first communication section transmits, to the third communication section of the other communication apparatus, instruction information used to give instructions to store the channel state information regarding the first link for the calculation of the correlation value, the channel state information regarding the first link being measured by the third communication section of the other communication apparatus before a reduction in a quality of the second wireless communication is detected.

12. The communication apparatus according to claim 11, wherein

the first communication section transmits, to the third communication section of the other communication apparatus, information indicating a threshold used to determine whether there is the obstacle by comparing the threshold to the correlation value, and

when the correlation value is greater than or equal to the threshold, the first communication section receives information indicating the correlation value from the third communication section.

13. A communication apparatus, comprising:

a first communication section that performs a first wireless communication using a first link; and
a second communication section that performs a second wireless communication using a second link with a frequency higher than a frequency of the first link, wherein
the first communication section measures channel state information regarding the first link on a basis of a radio signal of the first link, and
when a reduction in a quality of the second wireless communication is detected in the second link,
the first communication section

calculates a correlation value of a correlation between first channel-state information and second channel-state information, the first channel-state information being the channel state information regarding the first link, which is measured before the reduction in the quality of the second wireless communication is detected, the second channel-state information being the channel state information regarding the first link, which is measured after the reduction in the quality of the second wireless communication is detected, and transmits information indicating the correlation value.

14. The communication apparatus according to claim 13, wherein
the first communication section

receives first instruction information used to give instructions to measure the channel state information regarding the first link and calculate the correlation value,

measures the second channel-state information regarding the first link on a basis of the first instruction information, and

calculates the correlation value on a basis of the measured second channel-state information and the first channel-state information measured before the first instruction information is received.

15. The communication apparatus according to claim 14, wherein

after receiving the first instruction information, the first communication section receives a first packet used to measure the channel state information, and

the first communication section measures the second channel-state information regarding the first link on a basis of the first packet.

16. The communication apparatus according to claim 15, wherein
the first communication section

receives second instruction information used to give instructions to measure and store the first channel-state information regarding the first link,

further receives a second packet used to measure the first channel-state information regarding the first link,

measures the first channel-state information regarding the first link on a basis of the second packet according to the second instruction information, and

stores therein the measured first channel-state information.

17. The communication apparatus according to claim 14, wherein
the first communication section

receives a first frame that includes

a preamble used to measure the second channel-state information regarding the first link, and
a control field that stores therein the first instruction information, and

measures the second channel-state information regarding the first link on a basis of the preamble according to the first instruction information included in the control field included in the first frame.

18. The communication apparatus according to claim 17, wherein
the first communication section

receives a second frame that includes

a preamble used to measure the first channel-state information regarding the first link, and
a control field that stores therein second instruction information used to give instructions to measure and store the first channel-state information regarding the first link,

measures the first channel-state information regarding the first link on a basis of the preamble according to the second instruction information included in the control field included in the second frame, and

stores therein the measured first channel-state information regarding the first link.

19. The communication apparatus according to claim 13, wherein

the second communication section performs the second wireless communication on a basis of a transmission parameter,

the second communication section retains the transmission parameter when the reduction in the quality of the second wireless communication is detected,

after transmitting the information indicating the correlation value, the first communication section receives information regarding whether the transmission parameter is reusable, and

the second communication section performs the second wireless communication reusing the retained transmission parameter on a basis of the received information.

**20.** A communication method, comprising:

performing a first wireless communication using a first link;
performing a second wireless communication using a second link with a frequency higher than a frequency of the first link;
acquiring channel state information regarding the first link on a basis of a radio signal of the first link; and
detecting presence of an obstacle that blocks the second wireless communication, on a basis of the channel state information regarding the first link.

**21.** A communication method, comprising:

performing a first wireless communication using a first link;
performing a second wireless communication using a second link with a frequency higher than a frequency of the first link;
measuring channel state information regarding the first link on a basis of a radio signal of the first link;
when a reduction in a quality of the second wireless communication is detected in the second link, calculating a correlation value of a correlation between first channel-state information and second channel-state information, the first channel-state information being the channel state information regarding the first link, which is measured before the reduction in the quality of the second wireless communication is detected, the second channel-state information being the channel state information regarding the first link, which is measured after the reduction in the quality of the second wireless communication is detected; and
transmitting information indicating the correlation value.

FIG.1A

FIG.1B

FIG.2

EP 4 651 548 A1

FIG.3

EP 4 651 548 A1

200:STA MLD (Communication apparatus)

210:Wireless communication section

FIG.4

Communication storage section 212

Communication controller 211

Storage section 240

Controller 230

STA 2

Amplification section 224

Wireless interface section 223

Signal processing section 222

Individual data processing section 221

Shared data processing section 213

STA 1

Amplification section 224

Wireless interface section 223

Signal processing section 222

Individual data processing section 221

250

EP 4 651 548 A1

AP MLD 100

STA MLD 200

| AP1<br>(sub 7GHz Link) | AP2<br>(mmWave Link) | STA1<br>(sub 7GHz Link) | STA2<br>(mmWave Link) |
|---|---|---|---|

| | P101 |
|---|---|
| Setup Phase | P101 |
| Calibration Phase | P102 |
| Normal Sounding Phase | P103 |
| Normal Data Tx Phase | P104 |
| mmWave Link Disconnection Detection Phase | P105 |
| Link Scanning Phase | P106 |
| mmWave Link Recovery Phase | P107 |

One Set

FIG.5

Setup Phase Sequence

FIG.6

EP 4 651 548 A1

| Element | Length | Element ID Extension | ... | CSI Measurement Capabilities Information | ... |
|---|---|---|---|---|---|

| ... | CSI Estimation flag | CSI Correlation Calculation flag | CSI Memorizing Capacity | ... |
|---|---|---|---|---|

Capability Element (sub 7GHz)

FIG.7

| Element | Length | Element ID Extension | ... | CSI Measurement Capabilities Information | ... |
|---------|--------|---------------------|-----|----------------------------------------|-----|

| ... | BF Parameter Retention flag | ... |
|-----|----------------------------|-----|

Capability Element (mmWave Link)

FIG.8

EP 4 651 548 A1

First Example: Calibration Phase Sequence

FIG.9

First Example : Normal Sounding Phase Sequence

FIG.10

EP 4 651 548 A1

First Example : mmWave Link Disconnection Sequence

FIG.11

First Example: CSI variation measurement request

FIG.12

| Category | UHR Action | Dialog Token | Result flag | Reason Code |
|----------|-----------|--------------|-------------|-------------|

First Example: CSI variation measurement response

FIG.13

First Example : Link Scanning Phase Sequence

FIG.14

EP 4 651 548 A1

FIG.15

First Example : mmWave Link Recovery Sequence

FIG.16

| Category | UHR Action | Dialog Token | Link Status | BF Parameter handling flag |
|---|---|---|---|---|

| Link ID | Recovery flag |
|---|---|

First Example: CSI variation measurement report

FIG.17

FIG.18

Second Example: Calibration Phase Sequence

FIG.19

EP 4 651 548 A1

| Frame Control | Duration | RA | TA | Sounding Dialog Token | STA Info 1 | ... | STA Info _n_ | FCS |

Bits:

| B0 | B1 B2 | B7 |
|---|---|---|
| NDP Announcement Variant | Sounding Dialog Token Number | |

| B0 B10 | B11 B19 | B20 | B21 B24 | B25 B26 | B27 | B28 | B29 B31 |
|---|---|---|---|---|---|---|---|
| AID11 | Partial BW Info | Calc Type | Nc Index | Feedback Type And Ng | Disambiguation | Codebook Size | Reserved |

Bits:

| 11 | 9 | 2 | 4 | 2 | 1 | 1 | 2 |

Second Example : New NDP-A

FIG.20

| Element | Length | Element ID Extension | CSI Correlation Feedback |
|---|---|---|---|

| CSI ID | Link ID | CSI Correlation Value |
|---|---|---|

Second Example: CSI Correlation Feedback Element

FIG.21

Second Example: Normal Sounding Phase Sequence

FIG.22

Second Example : Link Scanning Phase Sequence

FIG.23

EP 4 651 548 A1

FIG.24

Third Example : Calibration Phase Sequence

FIG.25

| Octets: 2 | 2 | 6 | 0 or 6 | 0 or 6 | 0 or 2 | 0 or 6 | 0 or 2 | 0 or 4 | variable | 4 |
|---|---|---|---|---|---|---|---|---|---|---|
| Frame Control | Duration /ID | Address 1 | Address 2 | Address 3 | Sequence Control | Address 4 | QoS Control | HT Control | Frame Body | FCS |

← MAC header →

| CSI Hold Flag | CSI ID | CSI Correlation Feedback flag |
|---|---|---|

Third Example : DATA frame

FIG.26

Third Example: Normal Data Tx Phase Sequence

FIG.27

EP 4 651 548 A1

Third Example: Link Scanning Phase Sequence

FIG.28

EP 4 651 548 A1

FIG.29

EP 4 651 548 A1

FIG.30

FIG.31

EP 4 651 548 A1

FIG.32

FIG.33

## INTERNATIONAL SEARCH REPORT

| International application No. |
|---|
| **PCT/JP2023/045192** |

**A. CLASSIFICATION OF SUBJECT MATTER**

*H04W 24/04*(2009.01)i; *H04W 16/28*(2009.01)i; *H04W 84/12*(2009.01)i; *H04W 88/06*(2009.01)i
FI:   H04W24/04; H04W84/12; H04W88/06; H04W16/28

According to International Patent Classification (IPC) or to both national classification and IPC

**B. FIELDS SEARCHED**

Minimum documentation searched (classification system followed by classification symbols)

H04W24/04; H04W16/28; H04W84/12; H04W88/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Ming Gan et al., Next Generation SG formation, IEEE 802.11-22/1083-01-0wng, 2022.07.11 particularly, slides 2-9 | 1-21 |
| A | JP 2020-534739 A (QUALCOMM INCORPORATED) 26 November 2020 (2020-11-26) paragraphs [0099]-[0129] | 1-21 |
| A | JP 2022-150060 A (ADVANCED TELECOMMUNICATIONS RESEARCH INSTITUTE INTERNATIONAL) 07 October 2022 (2022-10-07) paragraphs [0110]-[0145] | 1-21 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 January 2024** | **30 January 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

International application No.

**PCT/JP2023/045192**

| Box No. III | Observations where unity of invention is lacking (Continuation of item 3 of first sheet) |

This International Searching Authority found multiple inventions in this international application, as follows:

Document 1: GAN, Ming et al. Next Generation SG formation,
    IEEE 802.11-22/1083-01-0wng, 11 July 2022
        particularly, slides 2 to 9

The inventions of claims are classified into the two inventions below.

(Invention 1) Claims 1-12 and 20
    Document 1 indicates that a multi-link device has a sub-7 GHz band (corresponding to the "first link" in the present invention) and a mmwave (above 45 GHz) band (corresponding to the "second link of a higher frequency than that of the first link"). Claims 1-12 and 20 have the special technical feature wherein "the first communication unit acquires channel state information of the first link on the basis of a radio signal on the first link, and detects the presence of an obstacle that hinders the second wireless communication on the basis of the channel state information of the first link"; thus these claims are classified as invention 1.

(Invention 2) Claims 13-19 and 21
    Claims 13-19 and 21 share, with claim 1 classified as invention 1, the technical feature of "a communication device comprising: a first communication unit for performing first wireless communication on a first link; a second communication unit for performing second wireless communication on a second link of a higher frequency than that of the first link.
    However, this technical feature does not make a contribution over the prior art in light of the disclosure of document 1, and thus cannot be considered a special technical feature. Apart from this feature, there are not the same or corresponding special technical features among these inventions.
    Furthermore, claims 13-19 and 21 do not depend from claim 1. In addition, claims 13-19 and 21 are not substantially identical to or similarly closely related to any of the claims classified as invention 1.
    Accordingly claims 13-19 and 21 cannot be identified as invention 1.
    Meanwhile, claims 13-19 and 21 have the special technical feature of "when a decrease in quality of the second wireless communication on the second link is detected, calculating a value of correlation between first channel state information that is the channel state information of the first link as measured before the decrease in quality of the second wireless communication is detected and second channel state information that is the channel state information of the first link as measured after the decrease in quality of the second wireless communication is detected, and transmitting information indicating the value of correlation"; thus these claims are classified as invention 2.

Form PCT/ISA/210 (continuation of first sheet) (July 2022)

## INTERNATIONAL SEARCH REPORT

International application No.

**PCT/JP2023/045192**

| Box No. III | Observations where unity of invention is lacking (Continuation of item 3 of first sheet) |
|---|---|

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

International application No.

**PCT/JP2023/045192**

| Patent document cited in search report | | | Publication date (day/month/year) | Patent family member(s) | | | Publication date (day/month/year) |
|---|---|---|---|---|---|---|---|
| JP | 2020-534739 | A | 26 November 2020 | US | 2019/0090143 | A1 | |
| | | | | paragraphs [0117]-[0147] | | | |
| | | | | WO | 2019/055156 | A1 | |
| | | | | CN | 111095808 | A | |
| | | | | KR 10-2020-0056385 | | A | |
| JP | 2022-150060 | A | 07 October 2022 | (Family: none) | | | |

Form PCT/ISA/210 (patent family annex) (July 2022)